# FASCICULE DE BREVET EUROPEEN

(11) **EP 3 044 472 B1**
(45) Date de publication et mention de la délivrance du brevet: **18.08.2021**
(21) Numéro de dépôt: 14784272.8
(22) Date de dépôt: 10.09.2014
(51) Int. Cl.: F16D 48/06

(54) **PROCÉDÉ ET SYSTÈME DE PILOTAGE D'UN EMBRAYAGE**
VERFAHREN UND SYSTEM ZUR STEUERUNG EINER KUPPLUNG
METHOD AND SYSTEM FOR CONTROLLING A CLUTCH

(30) Priorité: 12.09.2013 FR 1358794
(43) Date de publication de la demande: 20.07.2016
(73) Titulaire: Valeo Embrayages, 80009 Amiens Cedex 2 (FR)
(72) Inventeur: MAUREL, Hervé, 80000 Amiens (FR); MAUREL, Pascal, 75009 Paris (FR); LAURIDSEN, Carsten, 60000 Beauvais (FR); FLECHE, Benoit, 60500 Chantilly (FR); LEBAS, Gilles, 80800 Villers Bretonneux (FR)
(74) Mandataire: Cardon, Nicolas
(86) Numéro de dépôt international: PCT/FR2014/052239
(87) Numéro de publication internationale: WO 2015/036695

(56) Documents cités:
- DE-A1-102004 043 541
- FR-A1- 2 812 919
- FR-A1- 2 887 606
- FR-A3- 2 952 983
- None

## Description

### Domaine technique de l'invention

L'invention se rapporte à un procédé et à un système de pilotage d'un embrayage.

L'invention vise plus particulièrement les embrayages dont le pilotage peut être assuré par un actionneur raccordé à une pédale d'actionnement associée à un capteur de position de sorte à permettre au conducteur de garder un contrôle des opérations d'embrayage tout en bénéficiant de fonctionnalités d'assistance au pilotage de l'embrayage.

### Etat de la technique

Dans l'état de la technique, il est connu des procédés de pilotage d'un embrayage dans lequel l'embrayage est commandé au moyen d'une pédale d'actionnement associée à un capteur de position, d'un actionneur électromécanique agencé pour déplacer l'embrayage entre une position embrayée et une position débrayée et une unité de pilotage apte à élaborer un signal de commande de l'actionneur en fonction de la position de la pédale d'actionnement.

Voir, par exemple, le document DE 10 2004 043 541. Un tel procédé de pilotage est par exemple décrit dans le document FR 2812919. Le procédé de pilotage décrit dans ce document permet d'augmenter le confort, la précision et la rapidité de la commande d'embrayage. Pour ce faire, le procédé prévoit notamment de piloter l'actionneur de sorte à accélérer le débrayage par rapport au déplacement de la pédale sur des courses mortes n'ayant pas d'effet sur le couple transmissible et de ralentir le débrayage par rapport au déplacement de la pédale pendant une course utile au cours de laquelle le couple transmissible par l'embrayage est modifié.

Par ailleurs, ce document prévoit d'équiper le véhicule d'un sélecteur permettant de sélectionner entre un mode de pilotage manuel dans lequel l'actionneur est déplacé en fonction de la position de la pédale et un mode automatique dans lequel le rapport de transmission est changé par déplacement d'un levier de vitesse, le débrayage et l'embrayage étant alors commandé automatiquement en fonction de la vitesse du moteur, de la vitesse du véhicule et de la position de la pédale d'accélérateur ou d'un organe commandé par la pédale d'accélérateur.

Toutefois, ce document ne prévoit pas la possibilité pour le conducteur de garder la maîtrise des opérations d'embrayage au moyen de la pédale d'actionnement de l'embrayage tout en bénéficiant de fonctionnalités d'assistance évoluées, tels que les fonctions roue-libre, dénommées « coasting » et « sailing » en langue anglaise, et prévoyant, dans certaines conditions de roulage du véhicule, de désaccoupler le vilebrequin du moteur à combustion de l'arbre d'entrée de la boîte de vitesse et d'arrêter le moteur à combustion de sorte à réduire la consommation de carburant et les émissions de dioxyde de carbone.

### Objet de l'invention

L'invention vise à remédier à ces problèmes en proposant un procédé de pilotage d'un embrayage permettant de bénéficier de fonctions d'assistance évoluées tout en permettant au conducteur de piloter manuellement l'embrayage au moyen d'une pédale d'actionnement.

Selon un mode de réalisation, l'invention fournit un procédé de pilotage d'un embrayage monté entre l'arbre de sortie d'un moteur et l'arbre d'entrée d'une boîte de vitesses d'un véhicule automobile au moyen :
- d'une pédale d'actionnement de l'embrayage mobile entre une position de repos et une position extrême enfoncée,
- d'un capteur associé à ladite pédale et apte à délivrer un signal de position de la pédale ;
- d'un actionneur agencé pour actionner l'embrayage entre une position embrayée et une position débrayée ; et
- d'une unité de pilotage agencée pour, dans un mode de pilotage manuel, commander l'actionneur en fonction du signal de position de la pédale, et, dans au moins un mode d'assistance, commander l'actionneur de manière automatique alors que la pédale d'actionnement de l'embrayage demeure dans sa position de repos ; ledit procédé de pilotage comprenant :
- analyser des conditions de roulage du véhicule afin de détecter des conditions de roulage caractéristiques autorisant le passage du mode de pilotage manuel vers le mode d'assistance ;
- analyser le signal de position de la pédale d'actionnement de l'embrayage afin de détecter si la pédale est en position de repos ; et
- activer le mode d'assistance dans lequel l'actionneur est piloté automatiquement vers la position débrayée de l'embrayage en réponse à la détection de conditions de roulage caractéristiques et de la position de repos de la pédale.

Ainsi, un tel procédé permet au conducteur de bénéficier de fonction d'assistance tout en lui permettant de piloter manuellement l'embrayage au moyen d'une pédale d'actionnement.

Selon d'autres modes de réalisation avantageux, un tel procédé peut présenter une ou plusieurs des caractéristiques suivantes :
- en mode d'assistance, le signal de position de la pédale d'actionnement de l'embrayage et un signal de position de l'actionneur sont analysés et le mode de pilotage manuel est réactivé en réponse à la détection d'une position de la pédale représentative d'une position de l'actionneur identique ou plus éloignée en direction de la position débrayée que la position de l'actionneur.
- le mode d'assistance et la commande de l'actionneur sont suspendues en réponse à une détection d'un déplacement de la pédale d'actionnement de l'embrayage jusqu'à ce que le mode d'assistance soit réactivé en réponse à la détection d'un retour de la pédale d'actionnement de l'embrayage dans sa position de repos ou que le mode de pilotage manuel soit activé en réponse à la détection d'une position de la pédale d'actionnement représentative d'une position de l'actionneur identique ou plus éloignée en direction de la position débrayée que la position de l'actionneur.
- en mode d'assistance, l'on détermine une consigne de couple transmissible par l'embrayage et l'on commande l'actionneur d'embrayage en fonction d'une consigne de couple transmissible par l'embrayage et d'une estimation temps réel du couple transmissible par l'embrayage.- en mode de pilotage manuel, le signal de position de la pédale est transformé en consigne de couple transmissible par l'embrayage et l'on commande l'actionneur d'embrayage en fonction de ladite consigne de couple transmissible.
- le signal de position de la pédale d'actionnement de l'embrayage est transformé en consigne de couple transmissible par l'embrayage par l'intermédiaire d'une table de conversion calibrable.
- la consigne de couple transmissible par l'embrayage est transformée en consigne de position de l'actionneur par l'intermédiaire d'une table de conversion apprise et modifiable en fonction de l'usure, du vieillissement et/ou de la température de l'embrayage.
- le mode d'assistance activé est un mode roue-libre dans lequel l'actionneur est commandé pour déplacer l'embrayage jusqu'à une position débrayée dans laquelle la transmission du couple entre l'arbre de sortie du moteur et l'arbre d'entrée de la boîte de vitesses est interrompue et une consigne d'extinction du moteur thermique est générée lorsque la transmission du couple est interrompue.
- pour détecter des conditions de roulage caractéristiques autorisant le passage du mode de pilotage manuel vers le mode d'assistance roue-libre, l'on détermine que la vitesse du véhicule est comprise entre deux seuils de vitesse et/ou l'on détermine que la décélération est inférieure à un seuil de décélération.
- les seuils de vitesses sont déterminés en fonction du rapport de transmission engagé, de la topologie de la route, d'informations de signalisation routière et/ou de conditions de circulation.
- le seuil d'accélération est déterminé en fonction d'une donnée d'inclinaison de la route obtenue via un inclinomètre ou un système de navigation fournissant des données topologiques.
- en mode roue-libre, pour déplacer l'embrayage jusqu'à une position débrayée, l'actionneur est commandé en fonction d'une consigne de couple transmissible correspondant au couple moteur puis en fonction d'une consigne de couple transmissible décroissante.
- en mode roue libre, une consigne d'allumage du moteur est générée en réponse à une détection d'un déplacement de la pédale d'actionnement de l'embrayage alors que l'embrayage est dans une position débrayée et le moteur éteint.
- en mode roue libre, l'actionneur est commandé pour déplacer l'embrayage jusqu'à une position embrayée en réponse à une détection d'une accélération ou une décélération du véhicule supérieure à un seuil alors que l'embrayage est en position débrayée et le moteur éteint.
- le mode d'assistance activé est un mode roue-libre à frein moteur dans lequel, en réponse à une détection d'une accélération du véhicule supérieure à un seuil alors que l'embrayage est en position débrayée et le moteur éteint, l'actionneur est commandé pour déplacer l'embrayage vers une position embrayée en fonction d'une consigne de couple transmissible par l'embrayage contrôlée en fonction d'une consigne d'accélération ou de vitesse du véhicule.
- pour détecter des conditions de roulage caractéristiques autorisant un passage vers le mode d'assistance roue-libre à frein moteur, l'on détermine que l'inclinaison de la route est supérieure à un seuil d'inclinaison.
- le mode d'assistance activé est un mode de filtration des vibrations dans lequel l'actionneur est commandé en fonction d'une consigne de couple transmissible par l'embrayage contrôlée de manière à obtenir un glissement entre l'arbre de sortie du moteur et l'arbre d'entrée de la boîte de vitesses correspondant à une consigne de glissement établie en fonction du régime et du couple moteur.
- le mode d'assistance activé est un mode d'assistance au changement de rapport de transmission dans lequel l'actionneur est commandé pour déplacer l'embrayage jusqu'à une position débrayée dans laquelle la transmission du couple entre l'arbre de sortie du moteur et l'arbre d'entrée de la boîte de vitesses est interrompue en réponse à une détection d'une manoeuvre du levier de vitesses puis l'actionneur est commandé pour déplacer l'embrayage vers une position embrayée en réponse à une détection de l'engagement d'un rapport de transmission.
- le mode d'assistance activé est un mode d'assistance au roulage ralenti dans lequel l'actionneur est commandé pour déplacer l'embrayage jusqu'à une position débrayée dans laquelle la transmission du couple entre l'arbre de sortie du moteur et l'arbre d'entrée de la boîte de vitesses est interrompue en réponse à une détection de la pédale de frein en position enfoncée et l'actionneur est commandé pour déplacer l'embrayage vers une position embrayée en réponse à une détection de la pédale de frein en position de repos.
- le mode d'assistance activé est un mode d'assistance au décollage du véhicule dans lequel l'actionneur est commandé pour déplacer l'embrayage jusqu'à une position débrayée en réponse à une détection de la pédale de frein en position enfoncée puis l'actionneur est commandé pour déplacer l'embrayage vers une position embrayée en fonction d'une consigne de couple transmissible correspondant au couple moteur, retardée d'un délai de temporisation en réponse à une détection de la pédale de frein en position de repos.
- le mode d'assistance au roulage ralenti et/ou le mode d'assistance au décollage du véhicule est activé par un signal provenant d'un module d'assistance au parcage automatique.

L'invention concerne également un système de pilotage d'un embrayage monté entre l'arbre de sortie d'un moteur et l'arbre d'entrée d'une boîte de vitesses d'un véhicule automobile comprenant:
- une pédale d'actionnement de l'embrayage mobile entre une position de repos et une position extrême enfoncée,
- un capteur associé à ladite pédale et apte à délivrer un signal de position de la pédale ;
- un actionneur agencé pour actionner l'embrayage entre une position embrayée et une position débrayée ; et
- une unité de pilotage agencée pour, dans un mode de pilotage manuel, commander l'actionneur en fonction du signal de position de la pédale, et, dans au moins un mode d'assistance, commander l'actionneur de manière automatique alors que la pédale d'actionnement de l'embrayage demeure dans sa position de repos ;
- ladite unité de pilotage étant en outre agencée pour analyser les conditions de roulage du véhicule afin de détecter des conditions de roulage caractéristiques autorisant le passage du mode de pilotage manuel vers le mode d'assistance, analyser le signal de position de la pédale d'actionnement de l'embrayage afin de détecter si la pédale est en position de repos ; et activer le mode d'assistance dans lequel l'actionneur est piloté automatiquement vers la position débrayée de l'embrayage en réponse à la détection de conditions de roulage caractéristiques et de la position de repos de la pédale.

Dans un mode de réalisation, l'unité de pilotage est agencée pour, en mode d'assistance, analyser le signal de position de la pédale d'actionnement de l'embrayage et le signal de position de l'actionneur et réactiver le mode de pilotage manuel en réponse à la détection d'une position de la pédale d'actionnement représentative d'une position de l'actionneur identique ou plus éloignée en direction de la position débrayée que la position de l'actionneur.

Selon d'autres modes de réalisation avantageux, un tel système de pilotage peut présenter une ou plusieurs des caractéristiques suivantes :
- l'unité de pilotage est intégrée à une unité de contrôle moteur.
- le système comporte un moyen de sélection de mode d'assistance permettant au conducteur de choisir s'il souhaite bénéficier d'un ou de plusieurs modes d'assistance.
- le moyen de sélection est choisi parmi un commutateur disposé sur un tableau de bord, un menu accessible via une interface électronique du contrôle de bord et/ou une application apte à communiquer avec un dispositif télématique et/ou téléphonique équipé d'une application dédiée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

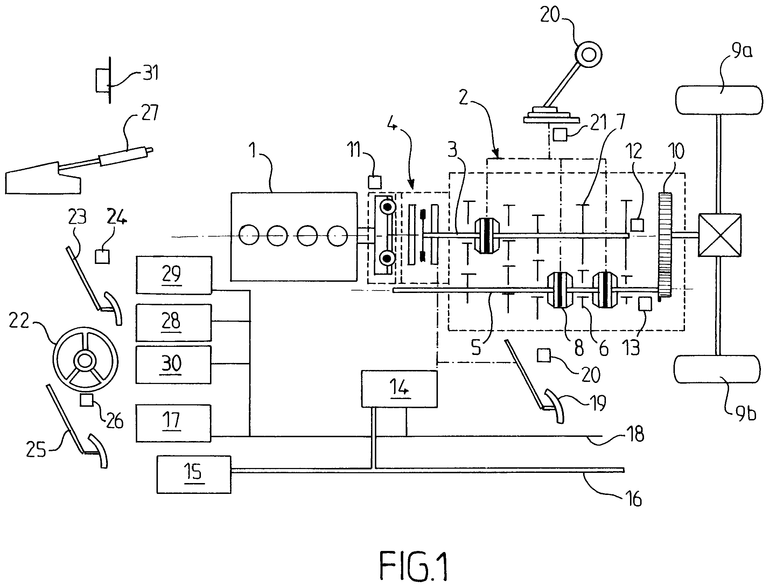

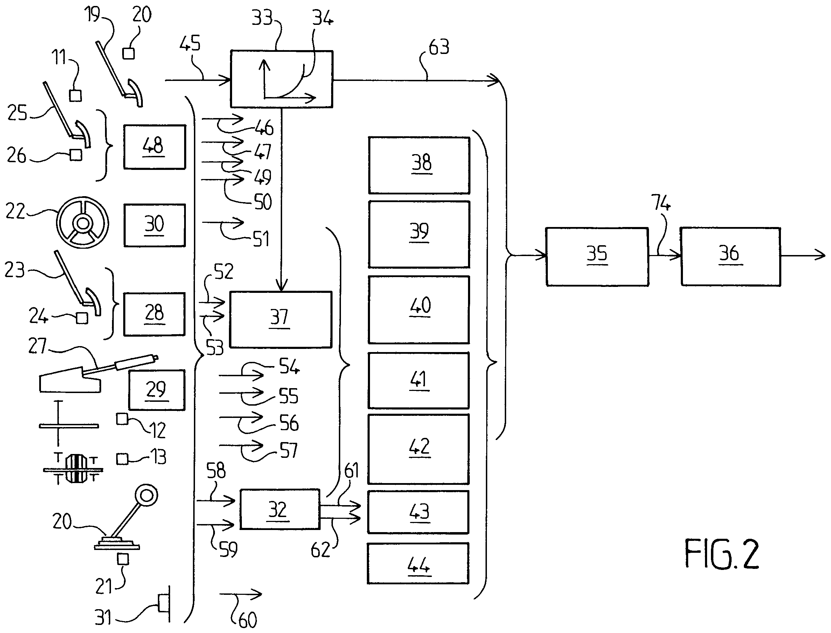

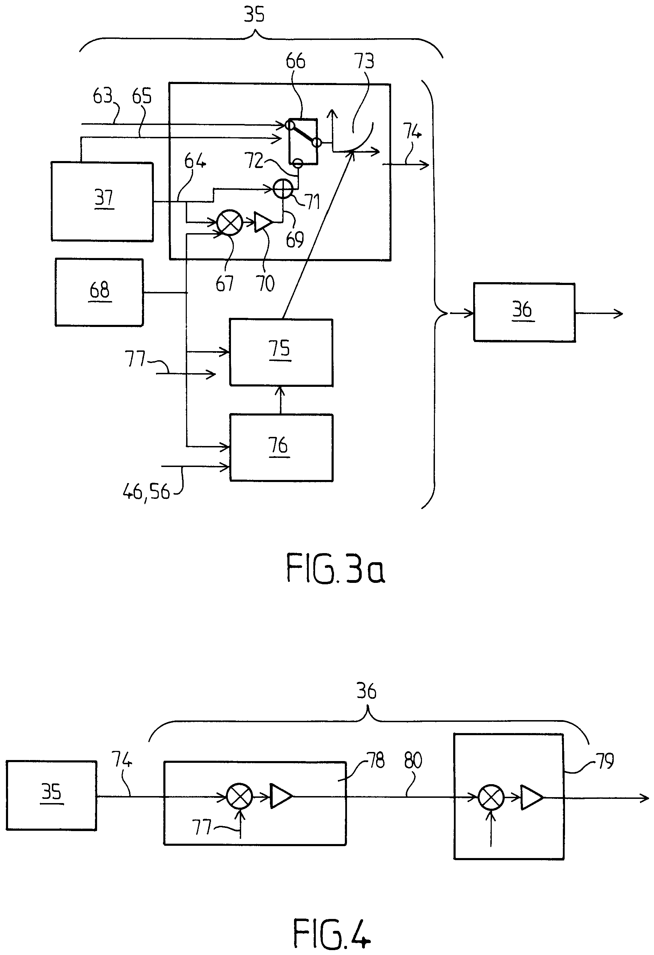

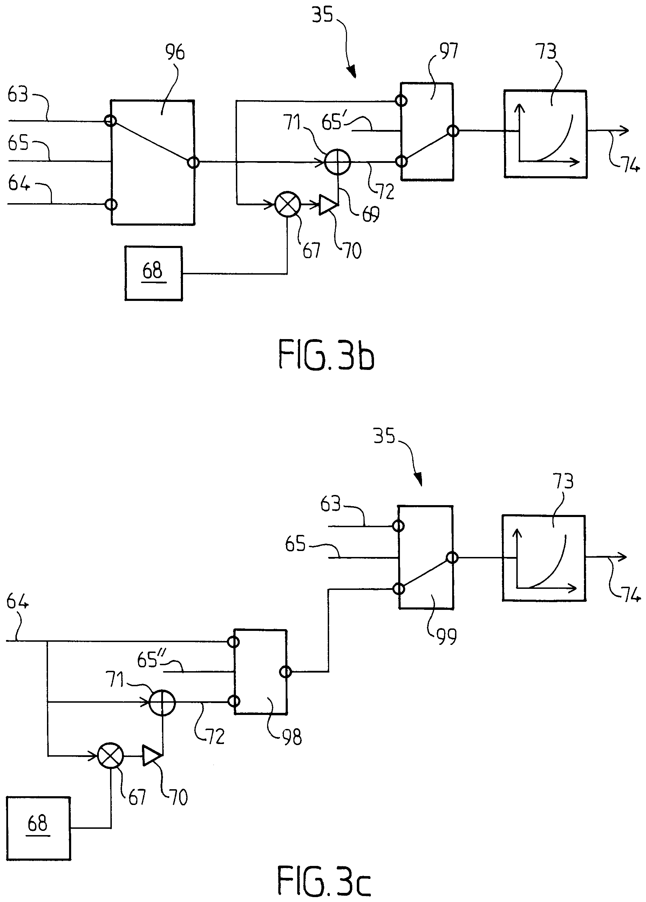

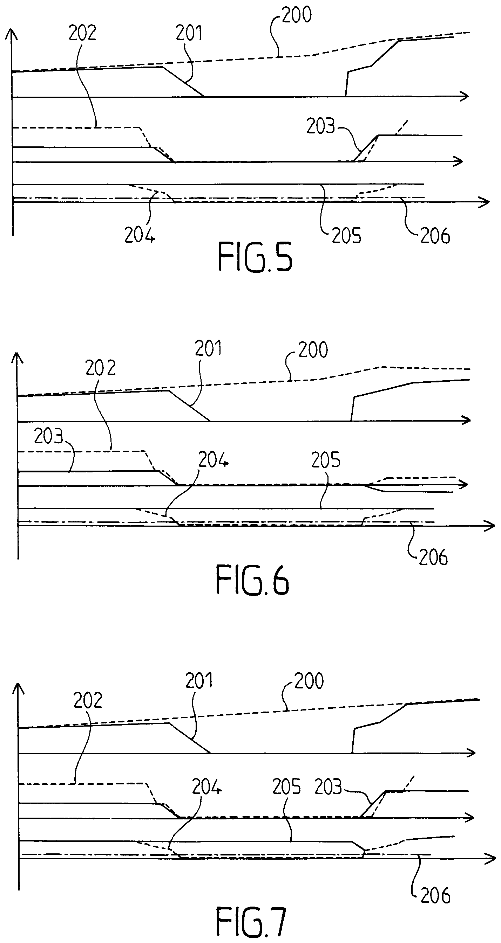

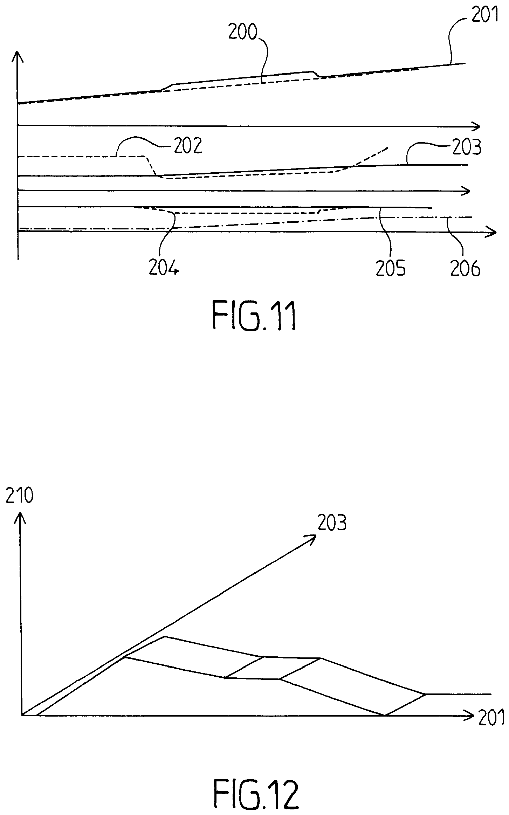

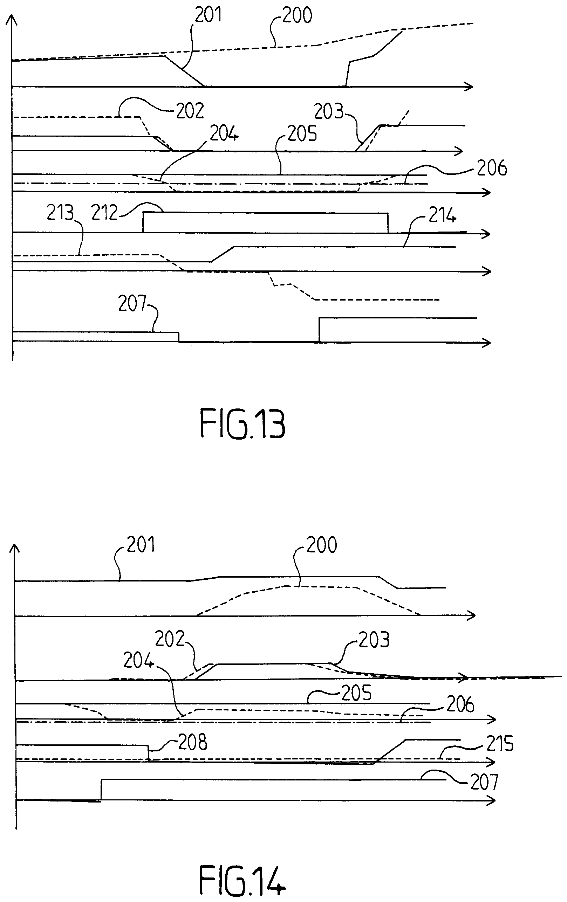

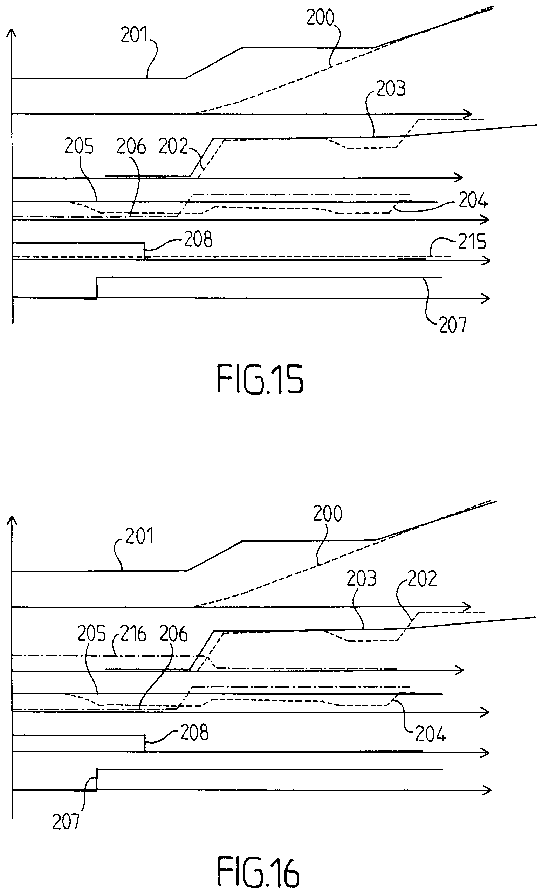

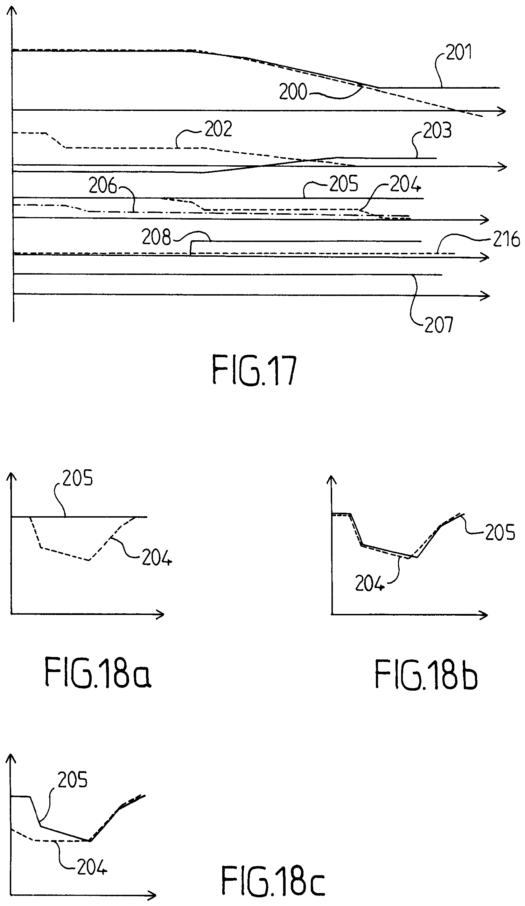

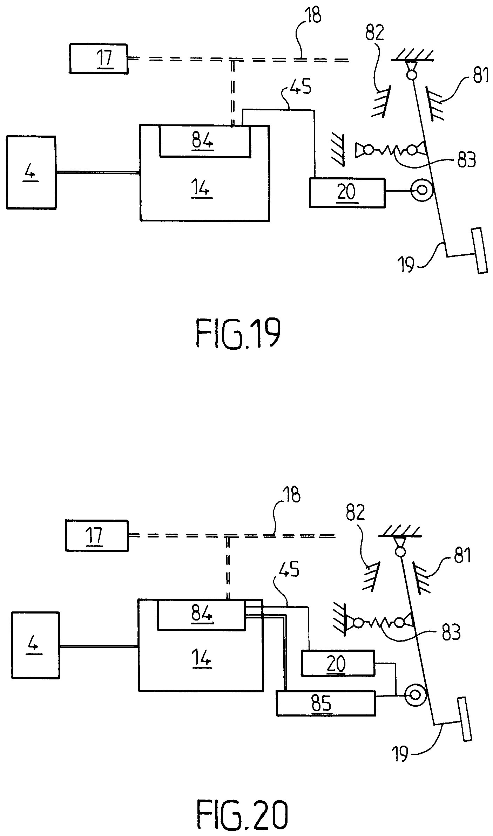

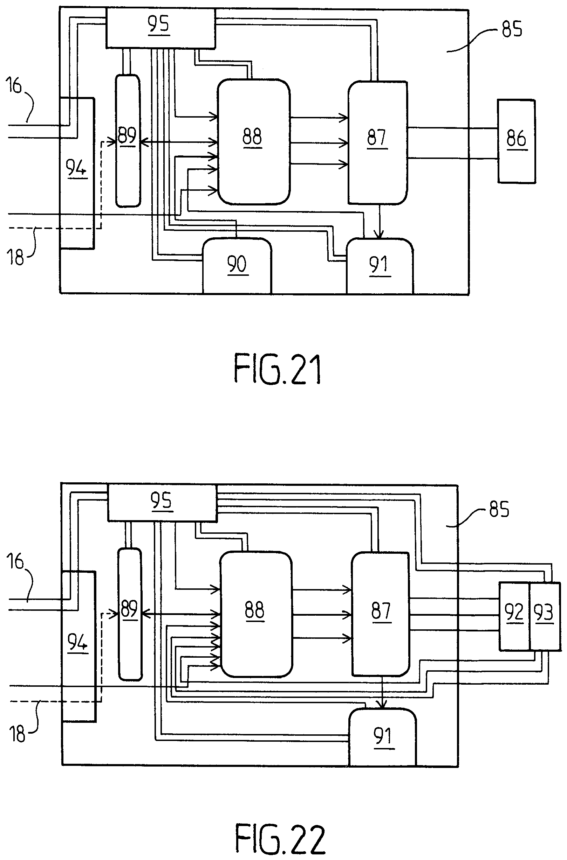

Sur ces figures :
- **La** **figure 1** est un schéma illustrant un véhicule automobile équipé d'un embrayage commandé au moyen d'un actionneur et d'une pédale d'actionnement associée à un capteur de position.
- **La** **figure 2** est un schéma fonctionnel illustrant une unité de pilotage.
- **La** **figure 3a** représente schématiquement un module de pilotage de l'embrayage selon un mode de réalisation.
- **La** **figure 3b** représente schématiquement un module de pilotage de l'embrayage selon un second mode de réalisation.
- **La** **figure 3c** représente schématiquement un module de pilotage de l'embrayage selon un troisième mode de réalisation.
- **La** **figure 4** représente schématiquement un module de pilotage de l'actionneur d'embrayage.
- **La** **figure 5** illustre le déroulement d'un mode d'assistance roue-libre.
- **La** **figure 6** illustre le déroulement d'une mode d'assistance roue-libre à frein moteur.
- **La** **figure 7****,** **8, 9 et 10** illustrent des conditions d'interruption du mode d'assistance roue libre ou du mode d'assistance roue libre à frein moteur.
- **La** **figure 11** illustre le déroulement du mode d'assistance au filtrage des vibrations.
- **La** **figure 12** est une cartographie en trois dimensions illustrant une consigne de glissement de l'embrayage en fonction du régime et du couple moteur.
- **La** **figure 13** illustre le déroulement du mode d'assistance au changement de rapport de transmission.
- **La** **figure 14** illustre le déroulement du mode d'assistance au roulage ralenti.
- **Les** **figures 15 et 16** illustrent le déroulement du mode d'assistance au décollage du véhicule respectivement sans et avec intervention d'un frein de stationnement commandé automatiquement par un module de gestion du frein de stationnement.
- **La** **figure 17** illustre le déroulement du mode d'assistance anti-calage.
- **Les** **figures 18a, 18b, 18c** illustrent la position de la pédale d'actionnement de l'embrayage et de l'actionneur d'embrayage, en pilotage manuelle, en mode d'assistance et en mode d'assistance durant lequel la pédale d'actionnement de l'embrayage est déplacée.
- **Les** **figures 19 et 20** représentent une pédale d'actionnement et un actionneur d'embrayage selon deux modes de réalisation.
- **Les** **figures 21 et 22** illustrent schématiquement une carte électronique d'un actionneur équipé respectivement d'un moteur à balais et d'un moteur à aimants permanents sans balai.

### Description détaillée de modes de réalisation

Le véhicule automobile, représenté sur la figure 1, comporte un moteur à combustion 1 dont l'arbre de sortie ou vilebrequin est relié à un arbre d'entrée 3 d'une boîte de vitesses 2 via un embrayage 4. De manière classique, la transmission de couple entre le vilebrequin et l'arbre d'entrée 3 de la boîte de vitesses 2 est assurée lorsque l'embrayage 4 est dans une position embrayée et est interrompue lorsque l'embrayage 4 est dans une position débrayée.

Le véhicule comporte une pédale 19 d'actionnement de l'embrayage montée pivotante sur le châssis du véhicule entre une position de repos et une position extrême enfoncée. La pédale 19 d'actionnement de l'embrayage est associée à un capteur de position 20 apte à délivrer un signal de position de la pédale 19. Un actionneur d'embrayage 14 est apte à agir sur la position de la butée d'embrayage afin de déplacer l'embrayage 4 d'une position embrayée vers une position débrayée, ou inversement. L'actionneur d'embrayage 14 est relié à une batterie 15 du véhicule via un réseau d'alimentation électrique 16 et à une unité de pilotage 17 via un bus de multiplexage 18. Dans un mode de réalisation, l'unité de pilotage 17 est intégrée à un calculateur de contrôle moteur qui héberge les ressources logicielles de pilotage de l'embrayage et d'un module de supervision de l'assistance.

Dans un mode de pilotage manuel, l'unité de pilotage 17 prend en compte la position de la pédale 19 pour commander l'actionneur d'embrayage 14. Lorsque la pédale 19 est en position de repos, l'embrayage 4 est en position embrayée et transmet le couple moteur entre le vilebrequin et l'arbre d'entrée 3 de la boîte de vitesses 2. Lorsque la pédale 19 est déplacée vers sa position extrême enfoncée, l'actionneur 14 est commandé, en fonction du signal de position de la pédale 19, de sorte à déplacer la butée d'embrayage vers une position débrayée dans laquelle la transmission du couple entre le moteur 1 et l'arbre d'entrée 3 de la boîte de vitesses 2 est interrompue.

La boîte de vitesses 2 comporte un arbre de sortie 5, parallèle à l'arbre d'entrée 3, qui est équipé de pignons fous 6 coopérant avec des pignons de vitesses 7 portés par l'arbre d'entrée 3. L'arbre de sortie 5 porte des moyens 8 de synchronisation et de crabotage permettant de solidariser en rotation les pignons fous 6 à l'arbre de sortie 5, de sorte à engager un rapport de transmission entre l'arbre d'entrée 3 et l'arbre de sortie 5 de la boîte de vitesses. L'arbre de sortie 5 coopère avec un pignon 10 d'entrée du différentiel afin de transmettre le couple aux roues 9a, 9b. Un levier de vitesses 20 permet de sélectionner et d'engager manuellement les moyens 8 de synchronisation. Le levier de vitesses 20 est associé avec un capteur de position 21 permettant de détecter le rapport sélectionné ainsi qu'un changement de rapport.

Par ailleurs, le véhicule est équipé de nombreux capteurs, tels qu'un capteur 11 de mesure du régime moteur, un capteur 12 de mesure de la vitesse de rotation de l'arbre d'entrée 3 de la boite de vitesses 2 et/ou un capteur 13 de mesure de la vitesse de rotation de l'arbre de sortie 5 de la boîte de vitesses 2.

Le véhicule automobile comporte en outre un volant 22, une pédale 23 de frein associée à un capteur 24 apte à délivrer un signal représentatif de la position de la pédale de frein, un module de pilotage du freinage du type ABS 28, une pédale 25 d'accélérateur associée avec un capteur de position 26 de la pédale d'accélérateur, un frein de stationnement 27, un module de gestion du frein de stationnement 29 et un module d'assistance au parcage automatique 30.

Dans le mode de réalisation représenté, le véhicule est en outre équipé d'un moyen de sélection 31 de mode d'assistance permettant au conducteur de choisir s'il souhaite bénéficier d'un, de plusieurs ou de la totalité des modes d'assistance proposés. Le moyen de sélection 31 peut être un commutateur disposé sur le tableau de bord et/ou un panneau de configuration comportant un menu accessible via une interface électronique du contrôle de bord et autorisant une sélection des options d'assistance à la demande du conducteur. Dans un mode de réalisation, les options des modes d'assistance sont également configurables par l'intermédiaire d'une application apte à communiquer avec une application dédiée d'un dispositif télématique/téléphonique distant, du type « Smartphone ».

La figure 2 illustre un schéma fonctionnel d'une unité de pilotage de l'embrayage.

Pour le pilotage manuel, le signal 45 de position de la pédale d'actionnement 19 délivré par le capteur de position 20 est transformé par un module de conversion 33 en un signal 63 de consigne de couple transmissible par l'embrayage. Le module de conversion 33 génère un signal 63 de consigne de couple transmissible à partir d'une courbe 34 calibrable représentant le couple transmissible en fonction de la position de la pédale 19 d'actionnement de l'embrayage. Un tel module de conversion 33 permet d'optimiser le confort, la précision et la rapidité de la commande d'embrayage en adaptant la progressivité de l'embrayage en fonction de la course de la pédale 19.

Le signal 63 de consigne de couple transmissible est transmis à un module 35 de pilotage de l'embrayage qui génère, en fonction de ce signal 63 de consigne de couple transmissible, un signal 74 de consigne de position de l'actionneur. Le signal 74 de consigne de position de l'actionneur est alors transmis à un module 36 de pilotage de l'actionneur qui va asservir la position de l'actionneur 14 en fonction d'un signal représentatif de la position de l'actionneur, généré par un capteur de position de l'actionneur.

Pour les modes d'assistance, l'unité de pilotage comporte un module 37 de supervision de l'assistance. Le module 37 de supervision de l'assistance est agencé pour déterminer le mode d'assistance approprié en fonction de conditions de roulage du véhicule et/ou de la position d'équipements de pilotage du véhicule et pour émettre un signal d'activation d'un mode d'assistance en direction du module 35 de pilotage de l'embrayage afin que celui-ci pilote l'embrayage 4 en fonction d'un signal de consigne déterminé par l'un des modules 38, 39, 40, 41, 42, 43, 44, de mise en oeuvre d'une fonction d'assistance.

Le module 37 de supervision de l'assistance reçoit de nombreux signaux d'informations représentatifs des conditions de roulage du véhicule et de la position des équipements de pilotage du véhicule lui permettant de mettre en oeuvre les fonctions d'assistance.

Dans le mode de réalisation représenté, le module 37 de supervision de l'assistance reçoit les signaux suivants :
- un signal 45 représentatif de la position de la pédale 19 d'actionnement de l'embrayage, généré par le capteur 20 ;
- un signal 46 représentatif du régime moteur généré par le capteur 11 ;
- un signal 47 de couple moteur déterminé par une unité de contrôle moteur 48;
- un signal 49 représentatif de la position de la pédale 25 d'actionnement de l'accélérateur généré par le capteur de position 26 ;
- un signal 50 de conseil de changement de rapport de transmission fourni par l'unité de contrôle moteur 48 ;
- un signal 51 d'activation d'une demande d'assistance au parcage automatique du véhicule provenant du module 30 d'assistance au parcage du véhicule,
- un signal 52 représentatif de la position de la pédale 23 de frein généré par le capteur 24 associé ;
- un signal 53 représentatif de la vitesse des roues 9a, 9b fournies par le module de pilotage du freinage du type ABS 28 ;
- un signal 54 représentant le couple de freinage du frein de stationnement 27 provenant du module de gestion du frein de stationnement 29 ;
- un signal 55 d'activation du frein de stationnement 27 provenant du module de gestion du frein de stationnement 29 ;
- un signal 56 représentatif de la vitesse de rotation de l'arbre d'entrée 3 de la boîte de vitesses généré par le capteur 12 ;
- un signal 57 représentatif de la vitesse de rotation de l'arbre secondaire 5 de la boîte de vitesses généré par le capteur 13 ;
- un signal 58 représentatif du rapport de transmission sélectionné et un signal 59 représentatif d'un changement de rapport de transmission générés au moyen du capteur 21 de position du levier de vitesses 20 ;
- un signal 60 provenant du moyen de sélection 31 de mode d'assistance permettant au conducteur de choisir s'il souhaite bénéficier d'un, de plusieurs ou de la totalité des modes d'assistance proposés ; et
- un ou plusieurs signaux 61, 62 provenant d'un module 32 de détection d'intention de changement de rapport de transmission.

Par ailleurs, le module 37 de supervision de l'assistance comporte une pluralité de modules 38, 39, 40, 41, 42, 43, 44, de mise en oeuvre d'une fonction d'assistance qui sont agencés pour délivrer un signal de consigne de couple transmissible au module 35 de pilotage de l'embrayage, en fonction d'un ou plusieurs des signaux mentionnés ci-dessus.

Dans le mode de réalisation représenté, le module 37 de supervision de la transmission comporte les modules d'assistance suivants :
- un module 38 de filtration des vibrations générées par le moteur 1 ;
- un module 39 anti-calage permettant d'éviter le calage du moteur 1 en raison d'une absence de manoeuvre de la pédale 19 d'actionnement de l'embrayage par le conducteur ;
- un module 40 d'assistance au roulage ralenti permettant la manoeuvre automatique de l'embrayage 4 au roulage ralenti sans action sur la pédale 19 d'actionnement de l'embrayage ;
- un module 41 d'assistance au décollage permettant le décollage du véhicule sans action sur la pédale 19 d'actionnement de l'embrayage ;
- un module 42 d'assistance au changement de rapport de transmission permettant de changer de rapport sans action sur la pédale 19 d'actionnement de l'embrayage ;
- un module 43 roue-libre permettant de débrayer l'embrayage afin d'utiliser l'énergie cinétique du véhicule automobile sans qu'un couple résistant du moteur 1 freine le véhicule. A titre d'information, cette fonctionnalité est désignée par les termes « coasting ou sailing » en langue anglaise ;
- un module 44 roue-libre à frein moteur permettant, d'une part, de débrayer l'embrayage 4 afin d'utiliser l'énergie cinétique du véhicule automobile et, d'autre part, de contrôler la vitesse du véhicule en déplaçant l'embrayage 4 vers une position embrayée permettant de rétablir une transmission du couple entre le moteur 1 à l'arrêt et les roues du véhicule..

Les modules d'assistance 38, 39, 40, 41, 42, 43, 44 sont notamment agencés pour communiquer avec l'unité de contrôle moteur 48 afin de transmettre des consignes de couple au moteur thermique ou des requêtes d'extinction du moteur et/ou avec le module de gestion du frein de stationnement 29.

L'unité de pilotage de l'embrayage peut être intégrée dans l'unité de contrôle moteur 48 et/ou être intégrée dans la carte électronique de l'actionneur 14 d'embrayage. Dans un mode de réalisation, le module 37 de supervision de l'assistance et ses modules d'assistance 38, 39, 40, 41, 42, 43, 44 sont intégrés dans l'unité de contrôle moteur 48 alors que le module 36 de pilotage de l'actionneur est hébergé dans la carte électronique de l'actionneur 14.

La figure 3a illustre de manière détaillée le fonctionnement du module 35 de pilotage de l'embrayage selon un mode de réalisation.

Le module 35 de pilotage de l'embrayage reçoit, d'une part, un signal 63 de consigne de couple transmissible établi en fonction de la position de la pédale 19 d'actionnement de l'embrayage et, d'autre part, un signal 64 de consigne de couple transmissible établi par l'un des modules d'assistance 38, 39, 40, 41, 42, 43, 44 du module 37 de supervision de l'assistance.

Le module 35 de pilotage de l'embrayage reçoit également, du module 37 de supervision de l'assistance, un signal 65 d'activation d'un mode d'assistance. Le module 35 de pilotage de l'embrayage est équipé de moyens de sélection 66 qui permettent de choisir entre le signal 63 de consigne de couple transmissible établi en fonction de la position de la pédale 19 d'actionnement de l'embrayage et le signal 64 de consigne de couple transmissible établi par l'un des modules d'assistance 38, 39, 40, 41, 42, 43, 44, en fonction du signal 65 d'activation d'un mode d'assistance.

La consigne 64 établie par l'un des modules d'assistance 38, 39, 40, 41, 42, 43, 44 est comparée par des moyens de comparaison 67 avec une estimation temps réel du couple transmissible par l'embrayage, générée par un module 68 d'estimation du couple transmissible. Un tel module 68 d'estimation du couple transmissible est, par exemple, décrit dans le document FR 2863327. Un signal de correction 69 est établi par un correcteur 70 en fonction du résultat de la comparaison effectuée par les moyens de comparaison 67. Un sommateur 71 permet de délivrer un signal corrigé 72 de consigne de couple transmissible en fonction du signal 64 de consigne établi par l'un des modules d'assistance et du signal de correction 69.

Par ailleurs, le module 35 de pilotage de l'embrayage comporte également un module de conversion 73 permettant de convertir, le signal 63 de consigne de couple transmissible établi en fonction de la position de la pédale 19 ou le signal corrigé 72 de consigne de couple transmissible, en un signal 74 de consigne de position de l'actionneur. Le module de conversion 73 met en oeuvre un modèle mathématique dont les paramètres sont mis à jour par le module 75. Le module 75 est agencé pour mettre à jour les paramètres du modèle en fonction de l'estimation du couple transmissible générée par le module 68, d'une estimation de la température de l'embrayage établie par un module 76 d'estimation de la température de l'embrayage et d'un signal 77 de position de l'actionneur. Le module 76 d'estimation de la température estime la température de l'embrayage en fonction de l'estimation du couple transmissible élaborée par le module 68, du signal 46 de régime moteur et du signal 56 représentatif de la vitesse de rotation de l'arbre d'entrée 3 de la boîte de vitesses. Un tel module d'estimation de la température de l'embrayage est, par exemple, décrit dans le document FR 2936034. Ainsi, en combinant une conversion du signal de position de la pédale 19 d'actionnement de l'embrayage en consigne de couple transmissible par l'embrayage, d'une part, et en convertissant la consigne de couple transmissible en consigne de position de l'actionneur au moyen d'un module de conversion 73 prenant en compte la température de l'embrayage et son usure ou vieillissement, la relation entre la position de la pédale 19 d'actionnement de l'embrayage et le couple transmis par l'embrayage est indépendante de l'état thermique ou de l'usure de l'embrayage ce qui facilite les manoeuvres du conducteur.

Dans le mode de réalisation représenté sur la figure 3b, un moyen de sélection 96 permet de choisir entre le signal 63 de consigne de couple transmissible établi en fonction de la position de la pédale 19 et le signal 64 de consigne de couple transmissible établi par l'un des modules d'assistance 38, 39, 40, 41, 42, 43, 44, en fonction du signal 65 d'activation d'un mode d'assistance. A la sortie du moyen de sélection 96, le module 35 de pilotage de l'embrayage comporte un second moyen de sélection 97 permettant de choisir entre le signal de consigne à la sortie du moyen de sélection 96 et un signal corrigé 72 de consigne de couple transmissible établi sur la base du signal de consigne de couple à la sortie du moyen de sélection 96, corrigé au moyen des moyens de comparaison 67, du correcteur 70 et du sommateur 71 tels que décrits en relation avec la figure 3a. Un signal d'activation 65' de boucle de correction généré par le module 37 de supervision de l'assistance permet de choisir entre les deux signaux. Typiquement, le signal corrigé 72 au moyen de la boucle de correction est utilisé lors des opérations d'embrayage alors que l'autre signal est utilisé lors des opérations de débrayage. Comme dans le mode de réalisation précédent, le module 35 de pilotage de l'embrayage comporte un module de conversion 73 permettant de convertir, le signal de consigne de couple transmissible en un signal 74 de consigne de position de l'actionneur.

Dans le mode de réalisation représenté sur la figure 3c, un moyen de sélection 98 permet de choisir entre le signal 64 de consigne de couple transmissible établi par l'un des modules d'assistance 38, 39, 40, 41, 42, 43, 44, et un signal corrigé 72 de consigne de couple transmissible établi sur la base du signal 64 corrigé au moyen des moyens de comparaison 67, du correcteur 70 et du sommateur 71 tels que décrits en relation avec la figure 3a, en fonction d'un signal 65" d'activation de boucle de correction généré par le module 37 de supervision de l'assistance. Par ailleurs, le module 35 de pilotage de l'embrayage comporte un second moyen de sélection 99 permettant de choisir entre le signal 63 de consigne de couple transmissible établi en fonction de la position de la pédale 19 et le signal de consigne de couple transmissible à la sortie du moyen de sélection 98. Comme dans le mode de réalisation précédent, le signal corrigé 72 au moyen de la boucle de correction est utilisé lors des opérations d'embrayage alors que l'autre signal est utilisé lors des opérations de débrayage.

La figure 4 illustre, de manière détaillée, le fonctionnement du module 36 de pilotage de l'actionneur d'embrayage. Le module 36 de pilotage de l'actionneur d'embrayage comporte un correcteur 78 de position qui génère une consigne 80 de courant d'alimentation de l'actionneur en fonction d'une comparaison entre le signal 74 de consigne de position de l'actionneur et d'un signal 77 représentatif de la position de l'actionneur. Par ailleurs, le module 36 de pilotage de l'actionneur d'embrayage comporte, un correcteur 79 qui compense l'erreur entre la consigne 79 de courant d'alimentation et une mesure du courant d'alimentation de l'actionneur 14.

Nous décrirons maintenant le fonctionnement des modules d'assistance en relation avec les figures 5 à 17 illustrant l'évolution de différents signaux, représentant notamment des conditions de roulage du véhicule et la position d'équipements de pilotage du véhicule, lors de la mise en oeuvre des fonctions d'assistance.

Sur ces figures, l'on peut observer la vitesse de l'arbre d'entrée de la boîte de vitesses 200, le régime moteur 201, le couple transmissible par l'embrayage 202, le couple moteur 203, la position de l'actionneur d'embrayage 204, la position de la pédale d'actionnement de l'embrayage 205, la position de la pédale d'accélérateur 206, l'évolution du rapport de transmission engagé 207, la position de la pédale de frein 208, le signal 212 de conseil de changement de rapport de transmission, le signal de changement de rapport de transmission 213 ; le signal représentant le rapport de transmission sélectionné 214, la position du frein de stationnement 215 et le couple de freinage du frein de stationnement 216.

La figure 5 illustre la mise en oeuvre du mode d'assistance roue-libre permettant de débrayer l'embrayage 4 afin d'utiliser l'énergie cinétique du véhicule automobile sans qu'un couple résistant du moteur 1 freine le véhicule.

Lorsque le module 37 de supervision de l'assistance et/ou l'unité de contrôle moteur 38 détermine, d'une part, que les conditions de roulage du véhicules sont appropriées pour activer le mode d'assistance roue-libre, et que, d'autre part, la pédale 19 d'actionnement de l'embrayage est dans une position 205 de repos embrayée, et que la pédale d'accélérateur 25, est dans sa position 206 de repos ou dans une position inférieure à un seuil d'enfoncement tel qu'aucune commande de couple du moteur thermique autre que le maintien au ralenti n'est générée par le calculateur moteur, le module 37 d'assistance active le module roue-libre 43 et délivre, au module 35 de pilotage de l'embrayage, un signal 65 d'activation de l'assistance. L'embrayage est alors piloté en fonction d'un consigne de couple généré automatiquement par le module roue libre 43.

A titre d'exemple, les conditions de roulage du véhicule caractéristiques autorisant le passage du mode de pilotage manuel vers le mode d'assistance roue-libre comportent des vitesses comprises entre deux seuils prédéterminés, par exemple entre 0 et 50km/h et/ou entre 110 et 130km/h, et/ou des décélérations inférieurs à un seuil. Les seuils de vitesse peuvent être déterminés en fonction du rapport de transmission engagé, de la topologie de la route, d'informations de signalisation routière et/ou de conditions de circulation données par un système d'aide à la navigation. Les seuils de décélération peuvent être déterminés en fonction de l'inclinaison de la route susceptible d'être obtenue via un capteur de type inclinomètre ou par un système de navigation fournissant des données topologiques.

Lorsque le véhicule est équipé d'un moyen de sélection 31 de mode d'assistance, le module 37 de supervision de la transmission s'assure également que le mode d'assistance roue-libre a été sélectionné par le conducteur avant d'activer le module roue-libre 43 et/ou de délivrer un signal d'activation de l'assistance.

Comme représenté sur la figure 5, le module roue-libre 43 pilote l'actionneur d'embrayage 14 pour déplacer l'embrayage 4 jusqu'à une position débrayée (courbe 202) dans laquelle la transmission du couple entre l'arbre de sortie du moteur 1 et l'arbre d'entrée 3 de la boîte de vitesses 2 est interrompue. Afin d'assurer un débrayage confortable, le module roue-libre 43 élabore, dans une première phase, une consigne de couple transmissible par l'embrayage 4 correspondant au couple moteur 203 de telle sorte que le couple transmissible par l'embrayage 202 atteigne la valeur du couple moteur 203 puis, dans une seconde phase, le module roue-libre 43 délivre une consigne de couple transmissible décroissante permettant de diminuer progressivement le couple moteur 203 jusqu'au débrayage. En complément, lorsque le moteur 1 délivre un couple entraînant, le module roue-libre 43 délivre à l'unité de contrôle moteur 48une consigne de diminution progressive du couple moteur 203.

Lorsque l'embrayage 4 est complètement débrayé et que le couple transmissible 202 est nul, le module roue-libre 43 génère une consigne d'extinction du moteur 1. Le régime 201 du moteur 1 est alors nul. Le véhicule est alors en roue-libre et économise la quantité de carburant nécessaire au maintien en fonctionnement du moteur 1 ce qui permet de réduire les émissions de dioxyde de carbone de manière significative. Notons que, dans la mesure où le moteur 1, à l'arrêt, est désaccouplé de l'arbre d'entrée 3 de la boîte de vitesses 2, le rapport de transmission peut rester engagé.

Par la suite, l'accélération ou la décélération du véhicule est déterminée et comparée à un seuil. A titre d'exemple, l'accélération ou la décélération du véhicule peut être déterminée au moyen du signal représentant la vitesse 200 de l'arbre d'entrée 3 de la boîte de vitesses 2 si un rapport de transmission est engagé ou au moyen d'un signal 53 représentatif de la vitesse des roues fournies par le module de pilotage du freinage du type ABS 28. Lorsque l'on détecte une accélération ou une décélération du véhicule supérieure audit seuil, le moteur 1 est remis en fonctionnement et le module roue libre 43 pilote l'actionneur d'embrayage 14 pour ramener l'embrayage 4 vers une position embrayée.

Dans un mode de réalisation non représenté, le module roue-libre 43 pilote l'actionneur d'embrayage 14 vers une position embrayée avant la remise en fonctionnement du moteur 1 de telle sorte que l'embrayage 4 permet de lancer le moteur 1 sans utiliser le démarreur.

La figure 6 illustre le fonctionnement du module roue-libre à frein moteur 44. Ce mode d'assistance permet également de débrayer l'embrayage 4 afin d'utiliser l'énergie cinétique du véhicule automobile lorsque des conditions de roulage caractéristiques ont été détectées en freinant le véhicule ou en limitant son accélération dans une pente. Dans un mode de réalisation, l'on détermine lequel des modes d'assistance roue libre ou assistance roue libre à frein moteur est approprié en fonction de l'inclinaison de la route, le mode d'assistance roue libre à frein moteur étant sélectionné lorsque la pente de la route est la plus forte.

Dans un autre mode de réalisation, lorsque l'unité de pilotage 17 communique avec un module de pilotage du freinage du type ABS 28, un mouvement de la pédale 24 de frein vers sa position enfoncée permet de basculer du mode d'assistance roue libre au mode d'assistance roue libre à frein moteur, au moins une partie du couple de freinage étant alors fournie par le moteur à l'arrêt. Dans ce mode de réalisation, le redémarrage du moteur thermique n'a alors lieu que lorsque la pédale 25 d'actionnement de l'accélérateur est enfoncée.

Les opérations de débrayage et d'extinction du moteur 1 sont identiques à celles décrites en relation avec la figure 5. Toutefois, dans ce mode d'assistance, lorsqu'une accélération du véhicule supérieure à un seuil est détectée, le module roue libre à frein moteur 44 pilote l'embrayage 4 vers sa position embrayée de sorte à rétablir une transmission de couple entre le moteur 1 produisant un couple résistant permettant de contrôler l'accélération ou la décélération du véhicule.

Aussi, dans ce mode d'assistance, le module roue-libre à frein moteur 44 détermine un signal 64 de consigne de couple transmissible par l'embrayage en fonction de la vitesse, de l'accélération ou de la décélération du véhicule. Dans ce cas, la consigne 64 de couple transmissible par l'embrayage correspond au couple résistant nécessaire pour atteindre la consigne de vitesse, de décélération ou d'accélération du véhicule.

Un tel mode d'assistance est particulièrement avantageux en ce qu'il permet une recharge de la batterie lors des phases de freinage du véhicule.

On observe sur les figures 5 et 6 que la position 205 de la pédale 19 d'actionnement de l'embrayage demeure inchangée, en position de repos, pendant la mise en oeuvre des fonctionnalités d'assistance.

Les figures 7, 8, 9 et 10 illustrent des conditions d'interruption du mode d'assistance roue libre ou du mode d'assistance roue libre à frein moteur.

La figure 7 illustre une interruption d'un mode d'assistance roue libre ou roue libre à frein moteur lorsque le conducteur manoeuvre la pédale 19 d'actionnement de l'embrayage, dont la position est représentée par la courbe 205. Dès qu'un déplacement de la pédale 19 d'actionnement de l'embrayage est détecté, alors que le véhicule est en roue libre, le moteur 1, dont le régime est référencée 201, est redémarré. Par ailleurs, le module 37 de supervision de l'assistance analyse le signal de position de la pédale 19 d'actionnement de l'embrayage et détermine si la position de la pédale 19 d'actionnement de l'embrayage est représentative d'une position de l'actionneur 14 identique ou plus éloignée en direction de la position débrayée que la position 204 réelle de l'actionneur 14. Lorsque la position 205 de la pédale 19 correspond à une position de l'actionneur 14 moins éloignée que la position réelle ou estimée de l'actionneur, le pilotage de l'actionneur 14 est suspendu. Dès que la position de la pédale 19 correspond à une position de l'actionneur 14 identique ou plus éloignée en direction de la position débrayée que la position 204 réelle de l'actionneur 14, le mode de pilotage manuel est réactivé et l'actionneur 204 suit la volonté du conducteur via l'actionnement de la pédale 19 d'actionnement de l'embrayage.

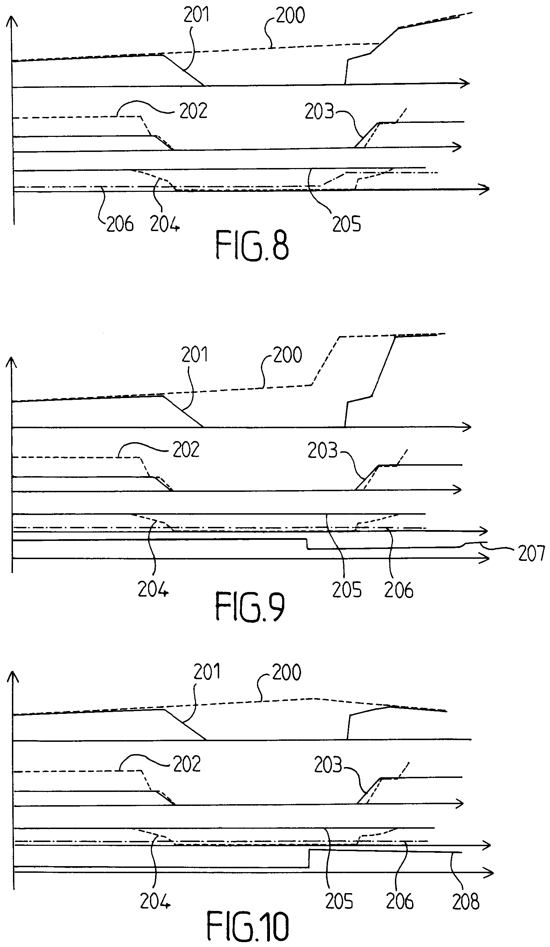

La figure 8 illustre une interruption d'un mode d'assistance roue libre ou roue libre à frein moteur lorsque le conducteur manoeuvre la pédale 25 d'actionnement de l'accélérateur, dont la position est représentée par la courbe 206. Dès lors qu'un déplacement de la pédale 25 d'actionnement de l'accélérateur supérieur à un seuil est détecté alors que le véhicule est en roue libre, le moteur 1 est remis en fonctionnement via le démarreur et l'actionneur 14 est piloté pour ramener l'embrayage 4 vers une position embrayée. Afin d'éviter une augmentation brutale du régime moteur 203, l'unité de contrôle moteur 48 génère une consigne d'augmentation progressive du couple moteur 203 tandis que la consigne de couple transmissible de l'embrayage est croissante. L'actionneur 14 est alors ramené dans sa position correspondant à la position de repos de la pédale 19 d'actionnement de l'embrayage. Le mode de pilotage manuel est réactivé et l'actionneur 14 suit la volonté du conducteur via l'actionnement de la pédale 19 d'actionnement de l'embrayage.

La figure 9 illustre une interruption d'un mode d'assistance roue libre ou roue libre à frein moteur lorsqu'un nouveau rapport de transmission est engagé par le conducteur (courbe 207). Dès lors que l'engagement d'un nouveau rapport de transmission a été détecté, le moteur thermique 1 est redémarré, soit en utilisant le démarreur soit en pilotant l'embrayage 4 vers sa position embrayée de telle sorte que la transmission de couple entre l'arbre d'entrée 3 de la boîte de vitesse et le vilebrequin permette de relancer le moteur 1. La consigne de couple transmissible est augmentée progressivement jusqu'à atteindre un consigne de couple transmissible correspondant au couple maximum transmissible, c'est à dire au couple transmissible correspondant à la position de repos de la pédale 19 d'actionnement de l'embrayage. Le mode de pilotage manuel est réactivé et l'actionneur 14 suit la volonté du conducteur via l'actionnement de la pédale 19 d'actionnement de l'embrayage.

De manière alternative, il est également possible d'activer une procédure d'interruption d'un mode d'assistance roue libre, tel que représenté et décrit en relation avec la figure 9, en fonction d'un signal 50 de conseil de changement de rapport de transmission fourni par l'unité de contrôle moteur 48.

La figure 10 illustre une interruption d'un mode d'assistance roue-libre ou roue-libre à frein moteur, lorsque le conducteur manoeuvre la pédale 23 de frein, dont la position est représentée par la courbe 208. Ce cas de figure est sensiblement identique à celui décrit en relation avec la figure 9. En effet, dès lors qu'un déplacement de la pédale de frein est détecté, le moteur 1 est redémarré, soit en utilisant le démarreur, soit en pilotant l'embrayage 4 vers sa position embrayée. La consigne de couple transmissible est augmentée progressivement jusqu'à atteindre un consigne de couple transmissible correspondant au couple maximum transmissible. Le mode de pilotage manuel est réactivé et l'actionneur 14 suit la volonté du conducteur via l'actionnement de la pédale 19 d'actionnement de l'embrayage.

Les figures 11 et 12 illustrent le fonctionnement du module 38 de filtration des vibrations générées par le moteur1. Ce module 38 vise à filtrer les acyclismes du moteur 1 en maintenant l'embrayage 4 dans une position de patinage dans laquelle il existe un glissement entre le vilebrequin du moteur 1 et l'arbre d'entrée 3 de la boîte de vitesses.

La figure 12 est une cartographie en trois dimensions illustrant une consigne de glissement 210 de l'embrayage en fonction du régime moteur 201 et du couple moteur 203. La consigne de glissement 210 est représentative d'une vitesse de rotation relative du vilebrequin par rapport à l'arbre d'entrée 3 de la boîte de vitesse.

Lorsque d'une part, la pédale d'actionnement de l'embrayage est en position de repos, et que, d'autre part, le régime moteur 201 et le couple moteur 203 correspondent à une zone de fonctionnement dans lequel une consigne de glissement est identifiée, le mode d'assistance à la filtration des vibrations est activé. Dès lors, comme représenté sur la figure 11, le module 38 de filtration des vibrations génère un signal de consigne de couple transmissible 202 légèrement inférieur au couple moteur 203 de sorte à générer un glissement et une vitesse de rotation relative entre le régime moteur 201 et le régime 200 de l'arbre d'entrée 3 de la boîte de vitesse. La consigne de couple transmissible 202 est contrôlée de manière à obtenir un glissement correspondant à la valeur de consigne de glissement établi en fonction du régime moteur 201 et du couple moteur 203.

Par la suite, lorsque le régime moteur 201 et le couple moteur 203 se déplacent dans une zone de fonctionnement dans lequel aucune consigne de glissement n'est identifiée, le régime moteur et le régime de l'arbre d'entrée de la boîte de vitesses sont progressivement synchronisées par la commande de l'actionneur 14. Puis, l'actionneur 14 est commandé en fonction d'une consigne de couple transmissible correspondant au couple maximum transmissible et à la position de repos de la pédale 19 d'actionnement de l'embrayage.

Le mode d'assistance à la filtration des vibrations est interrompu et le mode de pilotage manuel activé, lorsque la pédale 19 d'actionnement de l'embrayage est déplacée vers une position représentative d'une position de l'actionneur 4 identique ou plus éloignée en direction de la position débrayée que la position de l'actionneur 4 ou en manipulant le levier de vitesse 20, lorsque le mode d'assistance au changement de rapport a été choisi par le conducteur via le moyen de sélection 31.

Dans un mode de réalisation, le mode d'assistance à la filtration de vibrations est interrompu en fonction de la température de l'embrayage, lorsque le patinage de l'embrayage a conduit à un échauffement de l'embrayage supérieur à un seuil. La température de l'embrayage peut être déterminée via un capteur, en fonction de l'énergie dissipée ou à partir d'un modèle estimant t la température de l'embrayage. Une telle interruption d'un mode d'assistance peut également être prévue pour le mode d'assistance roue libre à frein moteur décrit précédemment ou pour un mode d'assistance au décollage du véhicule qui sera décrit par la suite.

La figure 13 illustre le fonctionnement du module 42 d'assistance au changement de rapport de transmission permettant de changer le rapport de transmission sans action sur la pédale 19 d'actionnement de l'embrayage.

Le signal 213 représentatif d'un changement de rapport de transmission et le signal 214 représentatif du rapport de transmission sélectionné sont analysés et le mode d'assistance au changement de rapport de transmission est activé lorsque l'analyse desdits signaux 213, 214 permet de détecter une intention de changement de rapport de transmission alors que la position 205 de la pédale 19 d'actionnement de l'embrayage est au repos.

Dans le mode de réalisation représenté sur la figure 13, afin d'anticiper un manoeuvre du levier de vitesses 20, le mode d'assistance au changement de rapport est activée lorsqu'un signal 212 représentatif d'un conseil de changement de rapport est émis par l'unité de contrôle moteur 48. Dans ce cas, le module 42 d'assistance au changement de rapport pilote un déplacement de l'embrayage en élaborant une consigne de couple transmissible légèrement supérieur au couple moteur 203. La consigne de couple transmissible est ici déterminée en fonction du couple moteur 203 et d'un coefficient de sécurité permettant d'assurer que l'embrayage 4 ne patine pas si une demande soudaine de couple supplémentaire est générée.

Lorsqu'une manœuvre du levier de vitesses 20 est détectée par l'analyse des signaux 213 et 214 représentatif d'un changement de rapport et du rapport de transmission sélectionné, le couple moteur 203 est réduit automatiquement jusqu'à une valeur nulle et le signal de couple transmissible par l'embrayage est agencé pour diminuer simultanément le couple transmissible de l'embrayage jusqu'au débrayage. Par la suite, lorsqu'il a été détecté qu'un rapport de transmission a été engagé, le module 42 d'assistance au changement de rapport pilote l'actionneur d'embrayage 14 pour ramener l'embrayage 4 vers une position embrayée et communique avec l'unité de contrôle moteur 48 afin de restaurer progressivement un couple moteur 203 représentatif de la position 206 de la pédale 25 d'actionnement de l'accélérateur. Le changement de rapport de transmission est donc effectué sans que le conducteur ait besoin de manipuler la pédale 19 d'actionnement de l'embrayage. En fin d'opération, l'actionneur 14 est dans une position correspondant au couple maximum transmissible et à la position de repos de la pédale 19 d'actionnement de l'embrayage

La figure 14 illustre le fonctionnement du module 42 d'assistance au roulage ralenti permettant la manoeuvre automatique de l'embrayage 4 au roulage ralenti sans action sur la pédale 19 d'actionnement de l'embrayage. A titre d'exemple, ce mode d'assistance peut être sélectionné via le moyen de sélection 31 de mode d'assistance. Lorsque le véhicule est à l'arrêt, que la pédale 23 de frein est en position enfoncée, le module 42 d'assistance au roulage ralenti est activé et pilote l'embrayage 4 vers sa position débrayée lorsque le premier rapport de transmission est engagé alors que la pédale 19 d'actionnement de l'embrayage demeure en position de repos. Par la suite, lorsque la pédale 23 de frein revient dans sa position de repos alors que la pédale 25 d'accélérateur et le pédale 19 d'actionnement de l'embrayage sont en position de repos et que le frein de stationnement 27 n'est pas activé, le module 42 d'assistance au roulage ralenti pilote l'embrayage 4 vers une position embrayée. Le véhicule avance à une vitesse faible, par exemple de l'ordre de 5 km/h. Si la pédale 23 de frein est de nouveau enfoncée alors le module 42 d'assistance au roulage ralenti pilote de nouveau l'embrayage vers une position débrayée alors que la pédale 19 d'actionnement de l'embrayage demeure en position de repos. Ainsi, dans le mode d'assistance au roulage ralenti, le conducteur peut gérer l'allure du véhicule, uniquement avec la pédale 23 de frein, sans aucune action sur la pédale 19 d'actionnement de l'embrayage.

Les figures 15 et 16 illustrent le mode d'assistance au décollage du véhicule sans action sur la pédale d'embrayage. Ce mode d'assistance permet un décollage du véhicule permettant d'obtenir une vitesse supérieure au régime ralenti du moteur. Ce mode d'assistance peut par exemple être sélectionné via le moyen de sélection 31 de mode d'assistance.

Lorsque le véhicule est à l'arrêt, que la pédale 23 de frein est en position enfoncée, le module 41 d'assistance au décollage est activé et pilote l'embrayage 4 vers sa position débrayée lorsque le premier rapport de transmission est engagé alors que la pédale d'actionnement de l'embrayage demeure en position de repos.

Par la suite, lorsque la pédale 23 de frein revient dans sa position de repos alors que la pédale 25 d'accélérateur est en position enfoncée et le frein de stationnement 27 n'est pas activé, le module 41 d'assistance au décollage génère un signal de couple transmissible par l'embrayage correspondant au couple moteur 203. Le signal de couple transmissible correspondant au couple moteur 203 peut être déterminé soit en fonction de la volonté du conducteur, c'est-à-dire en fonction de la position 206 de la pédale 25 d'accélérateur, soit en fonction du couple moteur 203 estimé par l'unité de contrôle moteur 48. Le signal de couple transmissible est retardé d'un délai de temporisation par rapport au couple moteur 203 de sorte à atteindre un point de fonctionnement correspondant à l'accélération du véhicule souhaitée par le conducteur.

Lorsque le régime moteur 201 et le régime de l'arbre d'entrée de la boîte de vitesses 200 sont proches d'être synchronisés, le module 41 d'assistance au décollage génère une consigne de couple transmissible légèrement inférieure au couple moteur 203 afin de permettre un embrayage progressif sans générer d'oscillation dans la transmission, préjudiciable au confort. Lorsque le régime moteur 201 et le régime 200 de l'arbre d'entrée 3 de la boîte de vitesses sont synchronisés, le module 41 d'assistance au décollage pilote l'actionneur 14 d'embrayage en élaborant une consigne de couple transmissible correspondant au couple maximum transmissible et à la position de repos de la pédale 19 d'actionnement de l'embrayage.

L'assistance au décollage est également interrompu si le conducteur actionne la pédale 19 d'embrayage et/ou le levier de vitesses 20 ou si des conditions de calage ou d'arrêt véhicule sont détectées.

La figure 16 illustre un mode d'assistance au décollage du véhicule avec interaction d'un frein de stationnement 27 commandé par un module de gestion du frein de stationnement 29. Dans ces circonstances, le module 35 de pilotage de l'embrayage communique avec le module de gestion du frein de stationnement 29 et le frein de stationnement 29 n'est désactivé que lorsque le couple transmis par l'embrayage est égal ou supérieure au couple du frein de stationnement 29. Ainsi, un tel procédé permet d'éviter le recul du véhicule en cas de démarrage en côté.

Dans des modes de réalisation de l'invention, le mode d'assistance au roulage ralenti et/ou le mode d'assistance au décollage du véhicule est activé par un signal provenant du module d'assistance au parcage automatique 30.

La figure 17 illustre un mode d'assistance anti-calage permettant d'éviter un calage du moteur 1 en raison d'une absence de manoeuvre de la pédale 19 d'actionnement de l'embrayage par le conducteur.

Lorsque la pédale 25 d'accélérateur est dans sa position de repos ou proche de celle-ci et que la vitesse du véhicule descend en-dessous d'un seuil, le module 39 anti-calage commande un déplacement de l'embrayage 4 en direction de la position débrayée en générant une consigne de couple transmissible 202 par l'embrayage légèrement supérieur au couple moteur 203. De manière avantageuse, le seuil de vitesse est variable en fonction de la décélération du véhicule, plus la décélération du véhicule est grande et plus le seuil de vitesse sera important.

Le module 39 anti-calage détermine un décrément de couple transmissible par l'embrayage permettant d'atteindre un couple d'embrayage nul pour une vitesse véhicule sensiblement égale à la vitesse du véhicule correspondant au régime ralenti et commande l'actionneur 14 d'embrayage en fonction du décrément de couple transmissible ainsi déterminé. Les figures 18a, 18b et 18c illustrent la position 205 de la pédale 19 d'actionnement de l'embrayage et la position 204 de l'actionneur d'embrayage lorsque l'unité de pilotage est dans un mode d'assistance (figure 18a), lorsque l'unité de pilotage est dans un mode de pilotage manuel (figure 18b) et lorsque la pédale d'actionnement de l'embrayage est manipulée lors d'un mode d'assistance (figure 18c).

En mode d'assistance, illustré sur la figure 18a, la pédale 19 d'actionnement de l'embrayage demeure en position de repos alors que la position 204 de l'actionneur est pilotée automatiquement. En mode de pilotage manuel, illustré sur la figure 18b, l'actionneur 14 d'embrayage est commandé en fonction d'un signal représentatif de la position 205 de la pédale 19 d'actionnement de l'embrayage.

Lorsque la pédale 19 d'actionnement de l'embrayage est enfoncée alors que l'actionneur 14 d'embrayage est commandé en mode d'assistance, le mode d'assistance automatique est suspendu et la position 204 de l'actionneur 14 d'embrayage reste stable jusqu'à ce que la pédale 19 revienne dans sa position de repos ou que la position 205 de la pédale 19 soit représentative d'une position de l'actionneur 14 identique ou plus éloignée en direction de la position débrayée que la position 204 de l'actionneur 14. Dans le premier cas, lorsque la pédale 19 retourne dans sa position de repos, le mode d'assistance automatique est réactivé. Dans le second cas, lorsque la position 205 de la pédale 19 est représentative d'une position de l'actionneur identique ou plus éloignée en direction de la position débrayée que la position 204 de l'actionneur 14, le mode de pilotage manuel est activé et l'actionneur 14 est piloté en fonction d'un signal représentatif de la position de la pédale 19 d'actionnement de l'embrayage.

Les figures 19 et 20 illustrent schématiquement différents modes de réalisation d'une pédale 19 d'actionnement d'embrayage et d'un actionneur 14 d'embrayage permettant la mise en oeuvre de l'invention.

La pédale 19 d'actionnement de l'embrayage, représentée sur la figure 19, est montée pivotante sur le châssis du véhicule entre une position de repos et une position extrême enfoncée. La course angulaire de la pédale 19 est délimitée par des butées 81, 82 définissant respectivement la position de repos et la position extrême enfoncée. Des moyens de rappel 83 sont agencés pour rappeler la pédale 19 vers sa position de repos. Les moyens de rappel 83 comportent un ou plusieurs ressorts dont les caractéristiques sont définies en fonction de critères d'ergonomie. Un capteur de position 20 est associé à la pédale 19 et permet de délivrer un signal 45 représentatif de la position de la pédale. Le capteur de position 20 est relié à une carte électronique 84 associée à l'actionneur 14 et communiquant via un bus de multiplexage 18 avec l'unité de pilotage 17. L'actionneur 14 agit sur la butée de l'embrayage 4, via une liaison mécanique ou via une liaison hydraulique, afin de déplacer l'embrayage 4.

Le mode de réalisation, illustré sur la figure 20, est sensiblement similaire à celui décrit en relation avec la figure 19 mais comporte en outre un actionneur de retour d'effort 85 permettant d'exercer sur la pédale 19 un effort résistant modulable. L'effort résistant peut notamment être déterminé en fonction de la position de la pédale, du sens de déplacement de la pédale, des situations de vie, de l'utilisateur ou autres. Dans le mode de réalisation représenté, l'actionneur de retour d'effort 85 est alimenté électriquement par la carte électronique 84 associé à l'actionneur 14 et commandé en effort par l'unité de pilotage 17. Dans un mode de réalisation, le capteur de position 20 est intégré à l'actionneur de retour d'effort 85.

Dans le mode de réalisation représenté sur les figures 21 et 22, la carte électronique 85 de l'actionneur 14 comprend un module électronique de puissance 87, connecté à la batterie du véhicule via un circuit d'alimentation électrique 16, destiné à assurer l'alimentation du moteur 86, 92 de l'actionneur, et le module 36 de pilotage de l'actionneur apte à commander le module électronique de puissance 87 afin de piloter le moteur.

Sur la figure 21, la carte électronique 85 est connectée à un moteur à courant continu à balais 86. La carte électronique 85 est raccordée à un connecteur faisceau 94 assurant la connexion de la carte électronique 85, à un réseau d'alimentation électrique 16 relié à la batterie 15 du véhicule et à un bus de multiplexage 18. Dans un mode de réalisation, le connecteur faisceau 94 peut également assurer la connexion de la carte électronique 85 à un ou plusieurs capteurs externes, tels qu'un capteur 12 de mesure de la vitesse de rotation de l'arbre d'entrée 3 de la boîte de vitesses

La carte électronique 85 comporte un dispositif de distribution et/ou de régulation d'alimentation électrique 95, connecté à la batterie 15 du véhicule via le connecteur 94 et apte à délivrer les tensions et puissances appropriées à l'alimentation des composants électriques hébergés sur la carte électronique 85.

La carte électronique 85 comporte, en outre, un module électronique de puissance 87 assurant l'alimentation électrique du moteur à balais 36 et un contrôleur programmable, tel qu'un microcontrôleur 88, faisant notamment office de module de pilotage de l'actionneur. Dans le mode de réalisation représenté, le moteur à alimenter étant un moteur à courant continu à balais 86, le module électronique de puissance 87 comporte un pont en H à transistors MOS.

Par ailleurs, la carte électronique 85 est équipée d'un pilote de multiplexage 89 qui est agencé pour gérer les communications, entrantes ou sortantes, au travers du bus de multiplexage 18 et communique avec une interface dédiée du microcontrôleur 88. Le microcontrôleur 88 est ainsi apte à communiquer avec l'unité de pilotage 17, et notamment à recevoir un signal de consigne pour le pilotage de l'actionneur.

La carte électronique 85 héberge un ou plusieurs capteurs internes 90, 91 aptes à délivrer un signal représentatif d'un paramètre physique du dispositif électromécanique d'actionnement. Dans le mode de réalisation représenté, la carte électronique 85 héberge un capteur de position 90 de l'actionneur 14 et un capteur 91 mesurant le courant d'alimentation du moteur à balais 86. Il est également possible d'équiper l'actionneur d'autres capteurs tels qu'un capteur de mesure de la température, par exemple.

Le capteur de position 90 comporte un élément de détection supporté sur le carte électronique 85 et disposé en vis-à-vis d'une cible montée sur un élément mobile en rotation de la cinématique de l'actionneur 14. Ainsi, le capteur de position 90 est apte à transmettre au microcontrôleur 88 un signal représentatif de la position de l'actionneur. Ce signal est par exemple un signal analogique ou un signal à modulation de largeur d'impulsion. Dans un mode de réalisation, la cible peut être un aimant permanent et l'élément de détection une sonde à effet hall.

Le microcontrôleur 88 est agencé pour commander le module 87 électronique de puissance assurant l'alimentation électrique du moteur 86 au moyen de signaux logiques ou de modulation de largeur d'impulsion. Le microcontrôleur 88 pilote le module 87 électronique de puissance en fonction du signal 74 de consigne reçue du module 35 de pilotage de l'embrayage et des signaux reçus par les capteurs 90, 91.

Sur la figure 22, la carte électronique 85 est connectée à un moteur 92 à aimants permanents sans balais. L'architecture de la carte électronique 85 est sensiblement similaire à celle décrite en relation avec la figure 21. Toutefois, le moteur 92 étant un moteur à courant triphasé, le module 87 électronique de puissance comporte un onduleur en pont triphasé. Par ailleurs, un capteur de commutation 93 est monté sur le moteur 92 et permet de délivrer, au microcontrôleur 88, un signal représentatif de la position du moteur.

Bien que l'invention ait été décrite en liaison avec plusieurs modes de réalisation particuliers, elle n'y est nullement limitée et elle comprend leurs combinaisons si celles-ci entrent dans le cadre de l'invention telle que définie par les revendications.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Procédé de pilotage d'un embrayage (4) monté entre l'arbre de sortie d'un moteur et l'arbre d'entrée (3) d'une boîte de vitesses d'un véhicule automobile au moyen :
- d'une pédale (19) d'actionnement de l'embrayage mobile entre une position de repos et une position extrême enfoncée,
- d'un capteur (20) associé à ladite pédale (19) et apte à délivrer un signal de position de la pédale ;
- d'un actionneur (14) agencé pour actionner l'embrayage (4) entre une position embrayée et une position débrayée ; et
- d'une unité de pilotage (17) agencée pour, dans un mode de pilotage manuel, commander l'actionneur (14) en fonction du signal de position de la pédale, et, dans au moins un mode d'assistance, commander l'actionneur (14) de manière automatique alors que la pédale (19) d'actionnement de l'embrayage demeure dans sa position de repos ;
ledit procédé de pilotage comprenant :
- analyser des conditions de roulage du véhicule afin de détecter des conditions de roulage caractéristiques autorisant le passage du mode de pilotage manuel vers le mode d'assistance ;
- analyser le signal de position de la pédale (19) d'actionnement de l'embrayage afin de détecter si la pédale (19) est en position de repos ; et
- activer le mode d'assistance dans lequel l'actionneur (14) est piloté automatiquement vers la position débrayée de l'embrayage en réponse à la détection de conditions de roulage caractéristiques et de la position de repos de la pédale (19).

2. Procédé de pilotage selon la revendication 1, dans lequel, en mode d'assistance, le signal (45, 205) de position de la pédale (19) d'actionnement de l'embrayage et un signal (204) de position de l'actionneur (104) sont analysés et le mode de pilotage manuel est réactivé en réponse à la détection d'une position de la pédale (19) représentative d'une position de l'actionneur identique ou plus éloignée en direction de la position débrayée que la position de l'actionneur (14).

3. Procédé de pilotage selon la revendication 1 ou 2, dans lequel le mode d'assistance et la commande de l'actionneur sont suspendues en réponse à une détection d'un déplacement de la pédale (19) d'actionnement de l'embrayage jusqu'à ce que le mode d'assistance soit réactivé en réponse à la détection d'un retour de la pédale (19) d'actionnement de l'embrayage dans sa position de repos ou que le mode de pilotage manuel soit activé en réponse à la détection d'une position de la pédale (19) d'actionnement représentative d'une position de l'actionneur identique ou plus éloignée en direction de la position débrayée que la position de l'actionneur (14).

4. Procédé de pilotage selon l'une quelconque des revendications 1 à 3, dans lequel, en mode d'assistance, l'on détermine une consigne de couple transmissible par l'embrayage (4) et l'on commande l'actionneur (14) en fonction d'une consigne de couple transmissible par l'embrayage et d'une estimation temps réel du couple transmissible par l'embrayage.

5. Procédé de pilotage selon l'une quelconque des revendications 1 à 4, dans lequel, en mode de pilotage manuel, le signal de position de la pédale (19) d'actionnement de l'embrayage est transformé en consigne de couple transmissible par l'embrayage et l'on commande l'actionneur (14) en fonction de ladite consigne de couple transmissible.

6. Procédé de pilotage selon l'une quelconque des revendications 1 à 5, dans lequel le mode d'assistance activé est un mode roue-libre dans lequel l'actionneur (14) est commandé pour déplacer l'embrayage (4) jusqu'à une position débrayée dans laquelle la transmission du couple entre l'arbre de sortie du moteur et l'arbre d'entrée (3) de la boîte de vitesses est interrompue et une consigne d'extinction du moteur (1) est générée lorsque la transmission du couple est interrompue.
la détection des conditions de roulage caractéristiques autorisant le passage du mode de pilotage manuel vers le mode d'assistance roue-libre étant notamment effectuée en déterminant que la vitesse du véhicule est comprise entre deux seuils de vitesse et/ou l'on détermine que la décélération est inférieure à un seuil de décélération,
les seuils de vitesses étant notamment déterminés en fonction du rapport de transmission engagé, de la topologie de la route, d'informations de signalisation routière et/ou de conditions de circulation, et le seuil d'accélération étant notamment déterminé en fonction d'une donnée d'inclinaison de la route obtenue via un inclinomètre ou un système de navigation fournissant des données topologiques.

7. Procédé de pilotage selon la revendication 6, dans lequel, en mode roue-libre, pour déplacer l'embrayage (4) jusqu'à une position débrayée, l'actionneur est commandé en fonction d'une consigne de couple transmissible correspondant au couple moteur puis en fonction d'une consigne de couple transmissible décroissante.

8. Procédé de commande selon l'une des revendications 6 ou 7, dans lequel, en mode roue libre, une consigne d'allumage du moteur est générée en réponse à une détection d'un déplacement de la pédale (19) d'actionnement de l'embrayage alors que l'embrayage (4) est dans une position débrayée et le moteur (1) éteint et/ou dans lequel, en mode roue libre, l'actionneur (14) est commandé pour déplacer l'embrayage (4) jusqu'à une position embrayée en réponse à une détection d'une accélération ou une décélération du véhicule supérieure à un seuil alors que l'embrayage (4) est en position débrayée et le moteur (1) éteint.

9. Procédé de pilotage selon l'une quelconque des revendications 6 à 8, dans lequel le mode d'assistance activé est un mode roue-libre à frein moteur dans lequel, en réponse à une détection d'une accélération du véhicule supérieure à un seuil alors que l'embrayage (4) est en position débrayée et le moteur (1) éteint, l'actionneur (14) est commandé pour déplacer l'embrayage (4) vers une position embrayée en fonction d'une consigne de couple transmissible par l'embrayage contrôlée en fonction d'une consigne d'accélération ou de vitesse du véhicule, la détection de conditions de roulage caractéristiques autorisant un passage vers le mode d'assistance roue-libre à frein moteur étant notamment effectuée en déterminant que l'inclinaison de la route est supérieure à un seuil d'inclinaison.

10. Procédé de pilotage selon l'une quelconque des revendications 1 à 9, dans lequel le mode d'assistance activé est un mode de filtration des vibrations dans lequel l'actionneur (14) est commandé en fonction d'une consigne de couple transmissible par l'embrayage contrôlée de manière à obtenir un glissement entre l'arbre de sortie du moteur et l'arbre d'entrée (3) de la boîte de vitesses correspondant à une consigne de glissement établie en fonction du régime (201) et du couple moteur (203), et/ou
dans lequel le mode d'assistance activé est un mode d'assistance au changement de rapport de transmission dans lequel l'actionneur (14) est commandé pour déplacer l'embrayage (4) jusqu'à une position débrayée en réponse à une détection d'une manoeuvre du levier de vitesses (20) puis l'actionneur (14) est commandé pour déplacer l'embrayage (4) vers une position embrayée en réponse à une détection de l'engagement d'un rapport de transmission.

11. Procédé de pilotage selon l'une quelconque des revendications 1 à 10, dans lequel le mode d'assistance activé est un mode d'assistance au roulage ralenti dans lequel l'actionneur (14) est commandé pour déplacer l'embrayage (4) jusqu'à une position débrayée dans laquelle la transmission du couple entre l'arbre de sortie du moteur et l'arbre d'entrée (3) de la boîte de vitesses est interrompue en réponse à une détection de la pédale (23) de frein en position enfoncée et l'actionneur (14) est commandé pour déplacer l'embrayage (4) vers une position embrayée en réponse à une détection de la pédale (23) de frein en position de repos, le mode d'assistance au roulage ralenti étant notamment activé par un signal provenant d'un module d'assistance au parcage automatique (30).

12. Procédé de pilotage selon l'une quelconque des revendications 1 à 11, dans lequel le mode d'assistance activé est un mode d'assistance au décollage du véhicule dans lequel l'actionneur (14) est commandé pour déplacer l'embrayage (4) jusqu'à une position débrayée en réponse à une détection de la pédale (23) de frein en position enfoncée puis l'actionneur (14) est commandé pour déplacer l'embrayage (4) vers une position embrayée en fonction d'une consigne de couple transmissible correspondant au couple moteur et retardée d'un délai de temporisation en réponse à une détection de la pédale (23) de frein en position de repos, le mode d'assistance au décollage du véhicule étant notamment activé par un signal provenant d'un module d'assistance au parcage automatique (30).

13. Système de pilotage d'un embrayage (4) monté entre l'arbre de sortie d'un moteur (1) et l'arbre d'entrée (3) d'une boîte de vitesses d'un véhicule automobile comprenant:
- une pédale (19) d'actionnement de l'embrayage mobile entre une position de repos et une position extrême enfoncée,
- un capteur (20) associé à ladite pédale (19) et apte à délivrer un signal de position de la pédale ;
- un actionneur (14) agencé pour actionner l'embrayage (4) entre une position embrayée et une position débrayée ; et
- une unité de pilotage (17) agencée pour, dans un mode de pilotage manuel, commander l'actionneur (14) en fonction du signal de position de la pédale, et, dans au moins un mode d'assistance, commander l'actionneur (14) de manière automatique alors que la pédale (19) d'actionnement de l'embrayage demeure dans sa position de repos ;
- ladite unité de pilotage (17) étant en outre agencée pour analyser les conditions de roulage du véhicule afin de détecter des conditions de roulage caractéristiques autorisant le passage du mode de pilotage manuel vers le mode d'assistance, analyser le signal de position de la pédale (19) d'actionnement de l'embrayage afin de détecter si la pédale (19) est en position de repos ; et activer le mode d'assistance dans lequel l'actionneur (14) est piloté automatiquement vers la position débrayée de l'embrayage en réponse à la détection de conditions de roulage caractéristiques et de la position de repos de la pédale (19).

14. Système de pilotage selon la revendication 13, dans lequel l'unité de pilotage est agencée pour, en mode d'assistance, analyser le signal (45, 205) de position de la pédale (19) d'actionnement de l'embrayage et le signal (204) de position de l'actionneur (14) et réactiver le mode de pilotage manuel en réponse à la détection d'une position de la pédale (19) représentative d'une position de l'actionneur identique ou plus éloignée en direction de la position débrayée que la position de l'actionneur (14), l'unité de pilotage de pilotage (17) étant notamment intégrée à une unité de contrôle moteur (48).

## Patentansprüche

1. Verfahren zur Steuerung einer Kupplung (4), die zwischen der Abtriebswelle eines Motors und der Eingangswelle (3) eines Getriebes eines Kraftfahrzeugs angebracht ist, mittels:
- eines Pedals (19) zur Betätigung der Kupplung, das zwischen einer Ruheposition und einer vollständig niedergetretenen Position beweglich ist;
- eines Sensors (20), der dem Pedal (19) zugeordnet ist und geeignet ist, ein Positionssignal des Pedals zu liefern;
- eines Aktuators (14), der dafür ausgelegt ist, die Kupplung (4) zwischen einer eingekuppelten Position und einer ausgekuppelten Position zu betätigen; und
- einer Steuereinheit (17), die dafür ausgelegt ist, in einem Handsteuerungsmodus den Aktuator (14) in Abhängigkeit von dem Positionssignal des Pedals zu steuern und in wenigstens einem Assistenzmodus den Aktuator (14) automatisch zu steuern, während das Pedal (19) zur Betätigung der Kupplung in seiner Ruheposition verbleibt;
wobei das Verfahren zur Steuerung umfasst:
- Analysieren der Fahrbedingungen des Fahrzeugs, um charakteristische Fahrbedingungen zu erkennen, die den Übergang vom Handsteuerungsmodus zum Assistenzmodus gestatten;
- Analysieren des Positionssignals des Pedals (19) zur Betätigung der Kupplung, um zu erkennen, ob sich das Pedal (19) in der Ruheposition befindet; und
- Aktivieren des Assistenzmodus, in welchem der Aktuator (14) automatisch in die ausgekuppelte Position der Kupplung gesteuert wird, in Reaktion auf die Erkennung charakteristischer Fahrbedingungen und der Ruheposition des Pedals (19) .

2. Verfahren zur Steuerung nach Anspruch 1, wobei im Assistenzmodus das Positionssignal (45, 205) des Pedals (19) zur Betätigung der Kupplung und ein Positionssignal (204) des Aktuators (104) analysiert werden und der Handsteuerungsmodus in Reaktion auf die Erkennung einer Position des Pedals (19) wieder aktiviert wird, die für eine identische Position des Aktuators repräsentativ ist oder weiter entfernt in Richtung der ausgekuppelten Position als die Position des Aktuators (14) ist.

3. Verfahren zur Steuerung nach Anspruch 1 oder 2, wobei der Assistenzmodus und die Steuerung des Aktuators in Reaktion auf eine Erkennung einer Bewegung des Pedals (19) zur Betätigung der Kupplung ausgesetzt werden, bis der Assistenzmodus in Reaktion auf die Erkennung einer Rückkehr des Pedals (19) zur Betätigung der Kupplung in seine Ruheposition wieder aktiviert wird, oder bis der Handsteuerungsmodus in Reaktion auf die Erkennung einer Position des Pedals (19) zur Betätigung aktiviert wird, die für eine identische Position des Aktuators repräsentativ ist oder weiter entfernt in Richtung der ausgekuppelten Position als die Position des Aktuators (14) ist.

4. Verfahren zur Steuerung nach einem der Ansprüche 1 bis 3, wobei im Assistenzmodus ein Sollwert des von der Kupplung (4) übertragbaren Drehmoments bestimmt wird und der Aktuator (14) in Abhängigkeit von einem Sollwert des von der Kupplung übertragbaren Drehmoments und von einer Echtzeitschätzung des von der Kupplung übertragbaren Drehmoments gesteuert wird.

5. Verfahren zur Steuerung nach einem der Ansprüche 1 bis 4, wobei im Handsteuerungsmodus das Positionssignal des Pedals (19) zur Betätigung der Kupplung in einen Sollwert des von der Kupplung übertragbaren Drehmoments umgewandelt wird und der Aktuator (14) in Abhängigkeit von diesem Sollwert des übertragbaren Drehmoments gesteuert wird.

6. Verfahren zur Steuerung nach einem der Ansprüche 1 bis 5, wobei der aktivierte Assistenzmodus ein Freilaufmodus ist, in welchem der Aktuator (14) so gesteuert wird, dass er die Kupplung (4) in eine ausgekuppelte Position bewegt, in welcher der Übertragung des Drehmoments zwischen der Abtriebswelle des Motors und der Eingangswelle (3) des Getriebes unterbrochen ist, und eine Anweisung zum Abstellen des Motors (1) erzeugt wird, wenn die Übertragung des Drehmoments unterbrochen ist, wobei die Erkennung der charakteristischen Fahrbedingungen, die den Übergang vom Handsteuerungsmodus zum Freilauf-Assistenzmodus gestatten, insbesondere durchgeführt wird, indem bestimmt wird, ob die Geschwindigkeit des Fahrzeugs zwischen zwei Geschwindigkeitsschwellenwerten liegt, und/oder bestimmt wird, ob die Verzögerung niedriger als ein Verzögerungsschwellenwert ist,
wobei die Geschwindigkeitsschwellenwerte insbesondere in Abhängigkeit von dem eingelegten Getriebegang, von der Topologie der Straße, von Verkehrszeicheninformationen und/oder von Verkehrsbedingungen bestimmt werden und der Beschleunigungsschwellenwert insbesondere in Abhängigkeit von einer Angabe zur Neigung der Straße bestimmt wird, die über einen Neigungsmesser oder ein Navigationssystem, das topologische Daten liefert, erhalten wird.

7. Verfahren zur Steuerung nach Anspruch 6, wobei im Freilaufmodus, um die Kupplung (4) in eine ausgekuppelte Position zu bewegen, der Aktuator in Abhängigkeit von einem Sollwert des übertragbaren Drehmoments, der dem Motordrehmoment entspricht, und danach in Abhängigkeit von einem sich verkleinernden Sollwert des übertragbaren Drehmoments gesteuert wird.

8. Verfahren zur Steuerung nach einem der Ansprüche 6 oder 7, wobei im Freilaufmodus in Reaktion auf eine Erkennung einer Bewegung des Pedals (19) zur Betätigung der Kupplung, während sich die Kupplung (4) in einer ausgekuppelten Position befindet und der Motor (1) abgestellt ist, eine Anweisung zur Zündung des Motors erzeugt wird, und/oder wobei im Freilaufmodus in Reaktion auf eine Erkennung einer Beschleunigung oder einer Verzögerung des Fahrzeugs, die größer als ein Schwellenwert ist, während sich die Kupplung (4) in einer ausgekuppelten Position befindet und der Motor (1) abgestellt ist, der Aktuator (14) so gesteuert wird, dass er die Kupplung (4) in eine eingekuppelte Position bewegt.

9. Verfahren zur Steuerung nach einem der Ansprüche 6 bis 8, wobei der aktivierte Assistenzmodus ein Freilaufmodus mit Motorbremse ist, in welchem in Reaktion auf eine Erkennung einer Beschleunigung des Fahrzeugs, die größer als ein Schwellenwert ist, während sich die Kupplung (4) in einer ausgekuppelten Position befindet und der Motor (1) abgestellt ist, der Aktuator (14) in Abhängigkeit von einem Sollwert des von der Kupplung übertragbaren Drehmoments, der in Abhängigkeit von einem Sollwert der Beschleunigung oder der Geschwindigkeit des Fahrzeugs geregelt wird, so gesteuert wird, dass er die Kupplung (4) in eine eingekuppelte Position bewegt, wobei die Erkennung charakteristischer Fahrbedingungen, die einen Übergang zum Freilaufmodus mit Motorbremse gestatten, insbesondere durchgeführt wird, indem bestimmt wird, ob die Neigung der Straße größer als ein Neigungsschwellenwert ist.

10. Verfahren zur Steuerung nach einem der Ansprüche 1 bis 9, wobei der aktivierte Assistenzmodus ein Modus der Filterung der Schwingungen ist, in welchem der Aktuator (14) in Abhängigkeit von einem Sollwert des von der Kupplung übertragbaren Drehmoments gesteuert wird, der so geregelt wird, dass ein Schlupf zwischen der Abtriebswelle des Motors und der Eingangswelle (3) des Getriebes erhalten wird, der einem Schlupfsollwert entspricht, der in Abhängigkeit von der Drehzahl (201) und vom Motordrehmoment (203) festgelegt wird, und/oder
wobei der aktivierte Assistenzmodus ein Assistenzmodus mit Wechsel des Getriebeganges ist, in welchem der Aktuator (14) in Reaktion auf eine Erkennung einer Betätigung des Gangschalthebels (20) so gesteuert wird, dass er die Kupplung (4) in eine ausgekuppelte Position bewegt, und danach der Aktuator (14) in Reaktion auf eine Erkennung des Einlegens eines Getriebeganges so gesteuert wird, dass er die Kupplung (4) in eine eingekuppelte Position bewegt.

11. Verfahren zur Steuerung nach einem der Ansprüche 1 bis 10, wobei der aktivierte Assistenzmodus ein Assistenzmodus für langsame Fahrt ist, in welchem der Aktuator (14) in Reaktion auf eine Erkennung des Bremspedals (23) in einer niedergetretenen Position so gesteuert wird, dass er die Kupplung (4) in eine ausgekuppelte Position bewegt, in welcher die Übertragung des Drehmoments zwischen der Abtriebswelle des Motors und der Eingangswelle (3) des Getriebes unterbrochen ist, und der Aktuator (14) in Reaktion auf eine Erkennung des Bremspedals (23) in einer Ruheposition so gesteuert wird, dass er die Kupplung (4) in eine eingekuppelte Position bewegt, wobei der Assistenzmodus für langsame Fahrt insbesondere durch ein Signal aktiviert wird, das von einem Assistenzmodul für das automatische Einparken (30) kommt.

12. Verfahren zur Steuerung nach einem der Ansprüche 1 bis 11, wobei der aktivierte Assistenzmodus ein Assistenzmodus für das Anfahren des Fahrzeugs ist, in welchem der Aktuator (14) in Reaktion auf eine Erkennung des Bremspedals (23) in einer niedergetretenen Position so gesteuert wird, dass er die Kupplung (4) in eine ausgekuppelte Position bewegt, und danach der Aktuator (14) in Reaktion auf eine Erkennung des Bremspedals (23) in einer Ruheposition so gesteuert wird, dass er die Kupplung (4) in Abhängigkeit von einem Sollwert des übertragbaren Drehmoments, der dem Motordrehmoment entspricht und um eine Verzögerungszeit verzögert ist, in eine eingekuppelte Position bewegt, wobei der Assistenzmodus für das Anfahren des Fahrzeugs insbesondere durch ein Signal aktiviert wird, das von einem Assistenzmodul für das automatische Einparken (30) kommt.

13. System zur Steuerung einer Kupplung (4), die zwischen der Abtriebswelle eines Motors (1) und der Eingangswelle (3) eines Getriebes eines Kraftfahrzeugs angebracht ist, umfassend:
- ein Pedal (19) zur Betätigung der Kupplung, das zwischen einer Ruheposition und einer vollständig niedergetretenen Position beweglich ist;
- einen Sensor (20), der dem Pedal (19) zugeordnet ist und geeignet ist, ein Positionssignal des Pedals zu liefern;
- einen Aktuator (14), der dafür ausgelegt ist, die Kupplung (4) zwischen einer eingekuppelten Position und einer ausgekuppelten Position zu betätigen; und
- eine Steuereinheit (17), die dafür ausgelegt ist, in einem Handsteuerungsmodus den Aktuator (14) in Abhängigkeit von dem Positionssignal des Pedals zu steuern und in wenigstens einem Assistenzmodus den Aktuator (14) automatisch zu steuern, während das Pedal (19) zur Betätigung der Kupplung in seiner Ruheposition verbleibt;
- wobei die Steuereinheit (17) außerdem dafür ausgelegt ist, die Fahrbedingungen des Fahrzeugs zu analysieren, um charakteristische Fahrbedingungen zu erkennen, die den Übergang vom Handsteuerungsmodus zum Assistenzmodus gestatten; das Positionssignal des Pedals (19) zur Betätigung der Kupplung zu analysieren, um zu erkennen, ob sich das Pedal (19) in der Ruheposition befindet; und den Assistenzmodus, in welchem der Aktuator (14) automatisch in die ausgekuppelte Position der Kupplung gesteuert wird, in Reaktion auf die Erkennung charakteristischer Fahrbedingungen und der Ruheposition des Pedals (19) zu aktivieren.

14. System zur Steuerung nach Anspruch 13, wobei die Steuereinheit dafür ausgelegt ist, im Assistenzmodus das Positionssignal (45, 205) des Pedals (19) zur Betätigung der Kupplung und das Positionssignal (204) des Aktuators (14) zu analysieren und in Reaktion auf die Erkennung einer Position des Pedals (19), die für eine identische Position des Aktuators repräsentativ ist oder weiter entfernt in Richtung der ausgekuppelten Position als die Position des Aktuators (14) ist, den Handsteuerungsmodus wieder zu aktivieren, wobei die Steuereinheit (17) insbesondere in ein Motorsteuergerät (48) integriert ist.

## Claims

1. Method for controlling a clutch (4) mounted between the output shaft of an engine and the input shaft (3) of a gearbox of a motor vehicle by means:
- of a clutch actuation pedal (19) movable between a rest position and a depressed end position,
- of a sensor (20) associated with said pedal (19) and able to deliver a signal for the position of the pedal;
- of an actuator (14) arranged to actuate the clutch (4) between an engaged position and a disengaged position; and
- of a control unit (17) arranged, in a manual control mode, to control the actuator (14) on the basis of the signal for the position of the pedal, and, in at least one assistance mode, to control the actuator (14) automatically whilst the clutch actuation pedal (19) remains in its rest position;
said control method comprising the steps of:
- analysing the driving conditions of the vehicle in order to detect characteristic driving conditions allowing the transition from the manual control mode to the assistance mode;
- analysing the signal for the position of the clutch actuation pedal (19) in order to detect whether the pedal (19) is in the rest position; and
- activating the assistance mode, wherein the actuator (14) is automatically driven into the disengaged position of the clutch in response to the detection of characteristic driving conditions and the rest position of the pedal (19).

2. Control method according to Claim 1, wherein, in assistance mode, the signal (45, 205) for the position of the clutch actuation pedal (19) and a signal (204) for the position of the actuator (104) are analysed and the manual control mode is reactivated in response to the detection of a position of the pedal (19), representative of a position of the actuator, identical to or arranged further in the direction of the disengaged position than the position of the actuator (14).

3. Control method according to Claim 1 or 2, wherein the assistance mode and the control mode of the actuator are suspended in response to a detection of a movement of the clutch actuation pedal (19) until the assistance mode is reactivated in response to the detection of a return of the clutch actuation pedal (19) into its rest position or until the manual control mode is activated in response to the detection of a position of the actuation pedal (19), representative of a position of the actuator, identical to or arranged further in the direction of the disengaged position than the position of the actuator (14).

4. Control method according to any one of Claims 1 to 3, wherein, in assistance mode, a setpoint is determined for torque transmissible by the clutch (4), and the actuator (14) is controlled on the basis of a setpoint for torque transmissible by the clutch and on the basis of a real-time estimation of the torque transmissible by the clutch.

5. Control method according to any one of Claims 1 to 4, wherein, in manual control mode, the signal for the position of the clutch actuation pedal (19) is transformed into a setpoint for torque transmissible by the clutch, and the actuator (14) is controlled on the basis of said transmissible torque setpoint.

6. Control method according to any one of Claims 1 to 5, wherein the activated assistance mode is a freewheel mode in which the actuator (14) is controlled in order to move the clutch (4) as far as a disengaged position, in which the transmission of the torque between the output shaft of the engine and the input shaft (3) of the gearbox is interrupted and a setpoint for the extinguishment of the engine (1) is generated when the transmission of the torque is interrupted,
wherein, in order to detect characteristic driving conditions allowing the transition from the manual control mode into the freewheel assistance mode, it is notably determined that the speed of the vehicle is between two speed thresholds and/or it is determined that the deceleration is lower than a deceleration threshold, wherein the speed thresholds are in particular determined on the basis of the engaged transmission ratio, the road topology, road sign information and/or traffic conditions,
and wherein the acceleration threshold is notably determined on the basis of a given gradient of the road obtained via an inclinometer or a navigation system providing topology data.

7. Control method according to Claim 6, wherein, in freewheel mode, in order to move the clutch (4) into a disengaged position, the actuator is controlled on the basis of a transmissible torque setpoint corresponding to the engine torque, then on the basis of a decreasing transmissible torque setpoint.

8. Control method according to any one of Claims 6 or 7, wherein, in freewheel mode, an engine ignition setpoint is generated in response to a detection of a movement of the clutch actuation pedal (19) when the clutch (4) is in a disengaged position and the engine (1) is switched off,
and/or, wherein, in freewheel mode, the actuator (14) is controlled in order to move the clutch (4) into an engaged position in response to a detection of an acceleration or a deceleration of the vehicle greater than a threshold when the clutch (4) is in a disengaged position and the engine (1) is switched off.

9. Control method according to any one of Claims 6 to 8, wherein the activated assistance mode is a freewheel mode with engine braking, in which, in response to a detection of an acceleration of the vehicle greater than a threshold when the clutch (4) is in the disengaged position and the engine (1) is switched off, the actuator (14) is controlled in order to move the clutch (4) into an engaged position on the basis of a setpoint for torque transmissible by the clutch controlled on the basis of a vehicle acceleration or speed setpoint,
wherein, in order to detect characteristic driving conditions allowing a transition into the freewheel assistance mode with engine braking, it is notably determined that the gradient of the road is greater than a gradient threshold.

10. Control method according to any one of Claims 1 to 9, wherein the activated assistance mode is a vibration filtering mode, in which the actuator (14) is controlled on the basis of a setpoint for torque transmissible by the clutch controlled so as to obtain a slip between the output shaft of the engine and the input shaft (3) of the gearbox corresponding to a slip setpoint established on the basis of the engine speed (201) and engine torque (203),
and/or, wherein the activated assistance mode is a transmission ratio change assistance mode, in which the actuator (14) is controlled so as to move the clutch (4) into a disengaged position in response to a detection of a shift lever (20) manoeuvre, then the actuator (14) is controlled in order to move the clutch (4) into an engaged position in response to a detection of the engagement of a transmission ratio.

11. Control method according to any one of Claims 1 to 10, wherein the activated assistance mode is a slowed driving assistance mode, in which the actuator (14) is controlled in order to move the clutch (4) into a disengaged position in which the transmission of the torque between the output shaft of the engine and the input shaft (3) of the gearbox is interrupted in response to a detection of the brake pedal (23) in a depressed position and the actuator (14) is controlled in order to move the clutch (4) into an engaged position in response to a detection of the brake pedal (23) in a rest position, wherein the slowed driving assistance mode is notably activated by a signal originating from an automatic parking assistance module (30).

12. Control method according to any one of Claims 1 to 11, wherein the activated assistance mode is a vehicle set-off assistance mode, in which the actuator (14) is controlled to move the clutch (4) into a disengaged position in response to a detection of the brake pedal (23) in a depressed position, then the actuator (14) is controlled to move the clutch (4) into an engaged position on the basis of a transmissible torque setpoint corresponding to the engine torque and delayed by a time delay in response to a detection of the brake pedal (23) in a rest position, wherein the vehicle set-off assistance mode is notably activated by a signal originating from an automatic parking assistance module (30) .

13. System for controlling a clutch (4) mounted between the output shaft of an engine (1) and the input shaft (3) of a gearbox of a motor vehicle, comprising:
- a clutch actuation pedal (19) movable between a rest position and a depressed end position;
- a sensor (20) associated with said pedal (19) and able to deliver a signal for the position of the pedal;
- an actuator (14) arranged to actuate the clutch (4) between an engaged and a disengaged position; and
- a control unit (17) arranged, in a manual control mode, to control the actuator (14) on the basis of the signal for the position of the pedal, and, in at least one assistance mode, to control the actuator (14) automatically whilst the clutch actuation pedal (19) remains in its rest position;
- said control unit (17) also being arranged to analyse the driving conditions of the vehicle in order to detect characteristic driving conditions allowing the transfer from the manual control mode to the assistance mode, analyse the signal for the position of the clutch actuation pedal (19) in order to detect whether the pedal (19) is in a rest position; and activate the assistance mode, wherein the actuator (14) is automatically driven into the disengaged clutch position in response to the detection of characteristic driving conditions and the rest position of the pedal (19).

14. Control system according to Claim 13, wherein the control unit is arranged, in assistance mode, to analyse the signal (45, 205) for the position of the clutch actuation pedal (19) and the signal (204) of the position of the actuator (14) and to reactivate the manual control mode in response to the detection of a position of the actuation pedal (19), representative of a position of the actuator, identical to or arranged further in the direction of the disengaged position than the position of the actuator (14),
, wherein the control unit (17) is notably integrated in an engine control unit (48).
